# EUROPEAN PATENT APPLICATION

(11) **EP 1 833 055 A1**
(43) Date of publication of application: **12.09.2007**
(21) Application number: 06711996.6
(22) Date of filing: 19.01.2006
(51) Int. Cl.: G11B 33/00, B09B 3/00, B09B 5/00, B65F 1/00, B65F 9/00, G11B 5/024, G11B 7/0055

(54) **DATA STORAGE MEDIUM DISCARDING METHOD AND CONTAINING BOX**

(30) Priority: 21.01.2005 JP 2005014432
(71) Applicant: Orient Instrument Computer Co., Ltd, Chuo-ku Osaka-shi 540-6035 (JP)
(72) Inventor: ITO, Tomoaki, ORIENT INSTRUMENT COMPUTER CO., LTD., Osaka-shi, Osaka, 536-0014 (JP)
(74) Representative: Paul, Dieter-Alfred
(86) International application number: PCT/JP2006/300750
(87) International publication number: WO 2006/077929

(57) **Abstract**

A method for disposing of a data recording means that disposes of the means efficiently with securing confidentiality of recorded data, achieving recycling, is intended to be presented.

The method includes the steps of putting at least one medium to be disposed of and selected from an optical recording medium and a magnetic recording medium, in which data is recorded, into a recovery box 95 and sealing the box 95 with a sealing means 97, delivering the sealed box 95 to an operation site 8, and disposing of data by destroying and/or erasing the recorded data by means of at least one device selected from an optical-data destroying device and a magnetic-data erasing device, with the recovery box 95 maintaining sealed status.

## Description

### BACKGROUND OF THE INVENTION

### TECHNICAL FIELD

The present invention relates to a method for disposing of data recording media such as optical data recording media, magnetic data recording media, and data recording paper efficiently with securing confidentiality of data recorded therein.

### BACKGROUND ART

A variety of data recording media for recording analogue or digital data have been put to practical use. For example, CDs (Compact Discs), DVDs (Digital Versatile Discs), etc. are used as optical data recording media (also called "optical recording media") for recording digital data. Magneto-optical recording disks (MOs: Magneto-Optical Discs) for recording data using both light and magnetism are also practically used. Digital video tapes, magnetic tapes for general-purpose computers, etc. are used as magnetic data recording media (also called "magnetic recording media") for recording digital data. Further, VHS (Video Home System) video tapes, 8 mm video tapes, etc. are used as magnetic data recording media for recording analogue data.

CDs or DVDs are each intrinsically read-only data recording media that have been pressed using an original disk. However, CD-Rs (CD Recordables) or DVD-Rs (DVD-Recordables) in each of which data can be written only once by means of a recording device and CD-RWs (CD ReWritables) or DVD-RWs (DVD ReWritables) rewritable more than once have also been put to practical use.

In disposing of a CD, a DVD, a CD-R, or a DVD-R among the optical data recording media, recorded data or the recording medium itself should be destroyed in order to secure confidentiality of the recorded data because the data recorded therein cannot be erased. In a CD-RW, a DVD-RW, or an MO, which are all rewritable, even after operation for erasing recorded data is carried out, the data itself remains, only an index indicating position information of the data being erased. Therefore, in disposing thereof, meaningless data should be written over an original data so as to erase the original data, thus requiring a long time for erasing the data.

Data recorded in a magnetic data recording medium cannot be erased either only by physically and/or logically formatting the medium. Therefore, also in disposing of such magnetic data recording medium, meaningless data should be written over an original data so as to erase the original data, requiring a long time for erasing the data. Physical destruction of a recording medium so as to make it unreadable is a more realistic disposal method than erasure of information. The patent document 1, for example, discloses a technology employing such a disposal method.
Patent document 1: JP 2004-071057A

### DISCLOSURE OF THE INVENTION

### PROBLEMS TO BE SOLVED BY THE INVENTION

The inventor proposed, in a formerly filed application (Japanese Patent Application No. 2003-372541), a device for dealing with data recording media that applies at least one of a magnetic field and an electromagnetic wave to an optical or a magnetic recording medium so as to destroy or erase data recorded therein. By means of the device, destruction of an optical data or erasure of a magnetic data can be efficiently carried out in a short time.

However, an organization managing a lot of data with high level of secrecy, for example, a governmental or municipal office, the police, and a hospital, should dispose of disused data recording media in the organization itself so as to secure confidentiality of its data. Therefore, even in the case that the device proposed in the application (Japanese Patent Application No. 2003-372541) is employed, a lot of labor and time may be required for disposing of a lot of data recording media, resulting in having a limited capacity in disposal in the organization.

Adding to such optical and magnetic recording media, a lot of data recording paper is used in offices. However, data recording paper on which secret information is recorded cannot be disposed of maintaining its original form, and should be disposed of after shredded by a shredder, requiring labor in disposal. Thus, a further innovation is desired.

On the other hand, in relation to disposal of such data recording media, recycling in which scraps are sorted according to materials and reused is recently proposed. However, the organization managing a lot of secret data bears too much labor for destroying or erasing data recorded in the data recording media to share further labor for sorting the media, whose data is disposed of, according to materials, failing to perform a systematic recycling.

The present invention is proposed in view of the above-described situation and has an object to provide a method for disposing of a data recording medium so as to dispose of the medium efficiently with securing confidentiality of data recorded therein and so as to achieve recycling. Simultaneously, the present invention has another object to provide a recovery box being applicable to the method for disposing of a data recording medium.

### SUMMARY OF THE INVENTION

One aspect of the present invention to achieve the above-described object is a method for disposing of a data recording means including at least one medium selected from an optical recording medium and a magnetic recording medium, including the steps of: (1) putting the data recording means into a bag, (2) fastening an opening of the bag with a strap, (3) putting the bag into a recovery box, (4) sealing the recovery box containing the bag, (5) delivering the sealed box to an operation site, and (6) disposing of data recorded in the data recording means by destroying or erasing the data at the operation site with the delivered box sealed by means of at least one device selected from an optical-data destroying device adapted to radiate a microwave and a magnetic-data erasing device adapted to generate a magnetic field.

In the present aspect, an optical recording medium is a medium consisting of a disk having pits thereon with a variety of reflection levels in radiation of a beam such as a laser beam, including a CD and a DVD. A magnetic recording medium is a medium in which data is recorded by magnetic poles, including a flexible disk (FD), a video tape and a general-purpose magnetic tape. An MO (magneto-optical disk) is a medium consisting of a disk on which a magnetic data is recorded with the disk's temperature raised by means of a laser beam, having a recording system belonging to a magnetic recording medium.

A term "with the box sealed" includes statuses in which the box is closed with a tape (a seal-determining sticker), which is adapted to determine breakage of the seal, attached onto a closed recovery box and in which the box is merely closed.

Herein, the optical and the magnetic recording media have different modes for recording data. According to these modes, methods for rendering data recorded therein unreadable are different.
A CD or a DVD, belonging to an optical recording medium, is a medium consisting essentially of a circular disk made of plastics such as a polycarbonate with irregularities called "pits" thereon so as to record data therein, a metal layer (aluminum deposition layer), and a protecting layer. The metal layer is for reflecting a laser beam radiated toward the pits so that a reflected beam may be read out.

Therefore, data recorded therein is rendered unreadable by a mechanical deformation of the pits and/or the aluminum deposition layer by means of, for example, heating.
On the other hand, data recorded in a magnetic recording medium (including a FD, a video tape, and an MO) is rendered unreadable by an erasure or disturbance of recorded data by means of application of a magnetic field.

According to the present aspect, a recovery box containing a data recording means is delivered to an operation site and subjected to at least one device selected from an optical-data destroying device and a magnetic-data erasing device with the box sealed. Subjection of the recovery box to the optical-data destroying device involves heating and deformation of pits and/or an aluminum deposition layer of a CD or a DVD contained therein by means of a microwave radiated from the optical-data destruction device, while subjection of the recovery box to the magnetic-data erasing device involves erasure or disturbance of magnetic data recorded on an FD or a video tape contained therein by application of a magnetic field generated by the magnetic-data erasing device.

According to the present aspect, subjection of a sealed recovery box to an optical-data destroying device or a magnetic-data erasing device completely destroys or erases data recorded in the data recording means contained in the recovery box.
Thus, destruction or erasure of data recorded in a data recording means is performed without opening the sealed recovery box, reducing the possibility of picking of the data recording means having recorded data in disposal of the means. That ensures confidentiality of recorded data.
In the case of subjecting sealed recovery boxes to the optical-data destroying device or the magnetic-data erasing device, a status of each box (i.e., before or after operation) is definitely distinguished by a stamp such as "operation completed".

Further, according to the present aspect, a data recording means is contained in a bag, which is fastened with a strap and in turn contained in a recovery box. Thus, the contained data recording means is doubly protected by the bag and the recovery box. That prevents such a failure that the contained data recording means bursts out of the bag even in the unlikely event that a part of the box is broken or damaged, thereby securing data confidentiality.

In the present aspect, the bag and the recovery box may be made of a material through which microwaves and magnetic field lines can pass. For example, a plastic bag may be used as the bag and a cardboard box or a wooden box may be used ad the recovery box.

The step of sealing the box may, for example, be performed by attaching a seal-determining sticker onto the box for determining breakage of the seal. Herein, "a seal-determining sticker" denotes a sticker with a set of letters such as "NEVER BREAK THE SEAL" printed on its front surface and with starch applied onto its back surface. The seal-determining sticker is attachable to a cardboard box or a wooden box like an ordinary sticker. However, once removed, the seal-determining sticker cannot be attached again and part of the starch is detached from the sticker and remains onto the box, the starch showing letters such as "SEAL BROKEN".

The use of such a seal-determining sticker as a sealing means clearly shows whether seal of the recovery box is broken. Such a configuration efficiently prevents unauthorized breakage of seal during delivery.

Such an embodiment facilitates confirmation of delivery of the recovery box with its seal unbroken from a source of delivery (delivery source) to the operation site, and of completion of the step of disposing of data. Consequently, a disposal system in which the recovery box can be disposed of with its seal unbroken is established, which enables entrusting a third party with disposal of data recording media.

The method for disposing of a data recording means preferably further includes the below-listed steps: (1) opening the sealed box, (2) separating the data recording means into fragments according to materials, (3) sorting the fragments according to materials, and (4) producing recycled raw materials by exerting at least one operation consisting of crushing, fusion, and dissolution on at least part of the sorted fragments.

By this preferred aspect, optical recording media and/or magnetic recording media are disassembled and/or destroyed to be separated into fragments according to materials, i.e., plastics, metal, and paper. The separated fragments are sorted according to materials. Therefore, the sorted plastics may be crushed into pellets, for example, so as to yield a recycled material. The sorted metal may be melted to form metal pellets so as to yield a recycled metal. The sorted paper may be dissolved and refined so as to yield a recycled paper. Thus, data recording media can be recycled by separation and sorting according to materials, effectively utilizing limited resources.

Preferably, the step of separating the optical recording medium includes heating a metal part of the optical recording medium by a metal-separating device adapted to radiate a microwave so as to separate the metal part from a plastic part.

As described above, a CD, a DVD, or an MO, which is an optical recording medium, includes a circular disk made of plastics such as a polycarbonate and a metal layer (aluminum deposition layer) for reflecting laser beam. Therefore, for separating the optical recording medium according to materials, the aluminum deposition layer should be separated from plastics such as a polycarbonate.

The inventor has already proposed in a prior application (Japan Patent Application No. 2003-170145) a metal-separating device for separating metal from an optical recording medium.
Therefore, by this preferred aspect, by subjecting an optical recording medium to the metal-separating device disclosed in the prior application (Japan Patent Application No. 2003-170145), a microwave is radiated to the optical recording medium so that the aluminum deposition layer can be separated in a short time. That improves efficiency of separation and further yields recycled materials from the separated metal and the separated plastics.

Preferably, the step of separating the optical recording medium includes scraping off a metal part of the optical recording medium by means of a scraper.

By this preferred aspect, a metal part of an optical recording medium can easily removed by scraping by means of a scraper. Thus, the optical recording medium is easily separated to materials, without aid of the metal-separating device as in the above-mentioned preferred aspect. Metal powder formed by the scraping by means of the scraper may be collected to be a recycled material.

Preferably, the optical-data destroying device and the magnetic-data erasing device are combined to form an integrated apparatus for disposing of the data recording means.

The inventor has already proposed in the previous application (Japan Patent Application No. 2003-372541) an integrated apparatus for disposing of a data recording means formed by combination of an optical-data destroying device and a magnetic-data erasing device.
Therefore, by this preferred aspect, by only subjecting a sealed recovery box to the apparatus for disposing of a data recording means as disclosed in the application (Japan Patent Application No. 2003-372541), destruction of an optical data recorded in an optical recording medium and erasure of a magnetic data recorded in a magnetic recording medium are performed sequentially, thus improving efficiency of work.

Another aspect of the present invention is a method for disposing of a data recording means including data recording paper, including the steps of: (1) putting the data recording paper into a bag, (2) fastening an opening of the bag with a strap, (3) putting the bag into a recovery box, (4) sealing the recovery box containing the bag, (5) delivering the sealed box to an operation site, and (6) disposing of data recorded in the data recording means by dissolving at the operation site the delivered box together with the data recording paper contained therein, with the box sealed.

Herein, "a data recording paper" in the present aspect, included in a data recording means, includes all data recording paper such as a recording paper or a delivery label (or a delivery slip), written by hand or printed by means of a personal computer.
A term "with the box sealed" in the present aspect includes statuses in which the box is closed with a tape (a seal-determining sticker), which is adapted to determine breakage of the seal, attached onto a closed recovery box and in which the box is merely closed.

By the present aspect, a sealed recovery box is delivered to and dissolved at the operation site with being sealed, not necessary to be opened in disposal. That avoids the possibility that a data recording paper contained in the recovery box is picked out thereof, thus securing confidentiality of recorded data.

By the present aspect, a bag put into a recovery box is fastened with a strap with a data recording paper contained therein. Thus, the data recording means is doubly protected by the bag and the recovery box. That prevents such a failure that the contained data recording paper bursts out of the box even in the unlikely event that a part of the box is broken or damaged, thereby securing data confidentiality.

In the present aspect, in consideration of that the box is to be dissolved, preferably a cardboard box is used as the recovery box and a paper bag or the like having flexibility and durability is used as the bag.

The present aspect facilitates confirmation of delivery of the recovery box from a delivery source to the operation site, and of completion of the step of disposing of data with its seal unbroken, as well as in the above-mentioned aspect. Consequently, a disposal system in which the recovery box can be disposed of with its seal unbroken is established, which enables entrusting a third party with disposal of data recording means.

Preferably, the method for disposing of a data recording means further includes the step of refining the dissolved data recording paper and the dissolved box so as to form a recycled material.

According to this preferred aspect, the data recording paper and the recovery box are dissolved and refined to form a recycled material, thus achieving an efficient reuse of resources.

Preferably, the recovery box is of a box shape and includes four peripheral walls each joining side to side, four top flaps joining upper sides of the peripheral walls respectively, and four bottom flaps joining lower sides of the peripheral walls respectively, and wherein the recovery box is preliminarily processed in the below-listed steps of: (1) binding the strap around an outer periphery of the bag, (2) putting the bag in the recovery box with the top flaps and the bottom flaps opened and extended, (3) projecting an end of the strap from between two adjacent top flaps, (4) folding back an opening end of the bag outward along the top flaps, and (5) folding flat the box such that the adjacent peripheral walls come close each other.

By this preferred aspect, a preliminarily-processed recovery box is folded flat, so as to take little space when not in use and to be extremely easy to be delivered.
Further, when in use, only opening of adjacent peripheral walls and closing of the bottom flaps allow the recovery box to contain therein a bag around which a strap is bound and which is capable of accommodating a data recording means.
Thus, a data recording means to be disposed of is immediately put into the bag within the recovery box. Further, an end of the strap projects from between two adjacent top flaps, so that an opening end of the bag is taken out of the top flaps and readily fastened with the strap after completion of putting the means into the bag. That enables an efficient work of putting a data recording means into the bag.

Preferably, the strap is movable only in a fastening direction.

This preferred aspect prevents the strap from being unfastened, protecting the bag from being opened. Thus, once the opening of the bag is fastened with the strap, a contained data recording means is protected from being taken out of the bag unless the strap is cut or the bag is torn.
In other words, if the data recording means is taken out of the bag, a trace of tearing of the bag or cutting of the strap remains.

Even in the unlikely event that the recovery box is broken or damaged, confirmation of the bag being untorn or of the strap being uncut allows confirmation of the data recording means not being taken out of the bag. That improves further confidentiality of data recorded in a data recording means.
In this preferred aspect, a general-purpose cable tie can be used as a strap for fastening a bag.

Preferably, the bag has a guideline for providing an indication of maximum acceptable amount.

By this preferred aspect, a maximum acceptable amount of data recording means can be contained in the bag, making reference to the guideline, thus enabling an efficient work of putting the means into the bag.

Preferably, the steps of putting the data recording means into the bag, putting the bag into the recovery box, and sealing the recovery box are carried out by a client asking disposal thereof, and the steps of delivering the sealed box to an operation site and disposing of data are carried out by one selected from (1) the client, (2) one receiving a request from the client, and (3) a third party receiving a request from either of the former ones.

As described above, fastening of the bag and sealing of the recovery box restrain taking out the data recording means. Thus, processes after sealing of the recovery box can be carried out by a third part other than the client.

By this preferred aspect, processes after sealing of the box, i.e., the steps of delivering the sealed box to an operation site and disposing of data are entrusted to one receiving a request from the client or a third party receiving a request from either of the former ones. That enables disposal with easing a burden on the client and with securing confidentiality of recorded data.

Preferably, the method for disposing of a data recording means further includes the steps of putting the sealed box into a lockable carrying case and locking up the carrying case, delivering (1) the carrying case containing the sealed box and (2) a key for the carrying case separately to an operation site, instead of delivering the sealed box itself to the operation site, and taking out the sealed box by releasing the lock of the carrying case by means of the key.

As described above, the formerly-described embodiment in which a seal-determining sticker is attached as a sealing means easily determines breakage of seal during delivery and is effective for restraining unauthorized breakage of seal of the recovery box. However, it is difficult to prevent breakage of seal by the embodiment.

According to this preferred aspect, the sealed recovery box is further put into a lockable carrying case, the carrying case is locked up, and the carrying case and its key are delivered separately. That efficiently prevents unauthorized breakage of seal of the recovery box during delivery and enables disposal with securing confidentiality of recorded data.

Preferably, the step of putting the sealed box into the carrying case and locking up the carrying case is carried out by a client asking disposal thereof, and the steps of delivering the carrying case and the key to an operation site and taking out the sealed box by releasing the lock of the carrying case by means of the key are carried out by one selected from (1) the client, (2) one receiving a request from the former client, and (3) a third party receiving a request from either of the former ones.

By this preferred aspect, processes after locking up the carrying case, i.e., the steps of delivering the carrying case and the key to an operation site and taking out the sealed box by releasing the lock of the carrying case by means of the key are entrusted to one receiving a request from the client or a third party receiving a request from either of the former ones, and whereby disposal is carried out with easing a burden on the client and with securing confidentiality of recorded data.

Preferably, the method for disposing of a data recording means further includes the step of issuing a certificate showing completion of disposal of the data recording means from the operation site, to which the data recording means was delivered and at which the data recording means was disposed of, to a source of delivery.

This preferred aspect allows the delivery source to ascertain, by receiving a disposal certificate, that the recovery box was delivered to the operation site maintaining sealed status, and that the box was subjected to at least one of the destroying and erasing operations maintaining sealed status. Thus, assured disposal of data recording means is achieved, maintaining mutual confidence between the delivery source and the destination.

Still another aspect of the present invention is a recovery box being of a box shape, including four peripheral walls each joining side to side, four top flaps joining upper sides of the peripheral walls respectively, and four bottom flaps joining lower sides of the peripheral walls respectively, wherein the recovery box is accompanied by a bag for containing an article and a strap for fastening an opening of the bag, and wherein the recovery box is processed in such a manner as binding the strap around an outer periphery of the bag, putting the bag in the recovery box with the top flaps and the bottom flaps opened and extended, projecting an end of the strap from between two adjacent top flaps, folding back an opening end of the bag outward along the top flaps, and folding flat the box such that the adjacent peripheral walls come close each other.

By this aspect, a recovery box is folded flat, so as to take little space when not in use and to be extremely easy to be delivered.
Further, only opening of adjacent peripheral walls and closing of bottom flaps allow the recovery box to contain therein a bag around which a strap is bound.
Thus, an article to be contained is immediately put into the bag within the recovery box. Further, an end of the strap projects from between two adjacent top flaps, so that an opening end of the bag is taken out of the top flaps and readily fastened with the strap after completion of putting the article into the bag. That enables an efficient work of putting the article into the bag.

Preferably, the strap is movable only in a fastening direction.

This preferred aspect prevents the strap from being unfastened, protecting the bag from being opened. In other words, if the article is taken out of the bag, a trace of tearing of the bag or cutting of the strap remains. Consequently, the use of the recovery box of the present aspect achieves easy management of incomings and outcomings of articles. Herein, in the present aspect, a general-purpose cable tie can be used as a strap for fastening the bag.

Preferably, the bag has a guideline for providing an indication of maximum acceptable amount.

By this preferred aspect, a maximum acceptable amount of articles can be contained in the bag, making reference to a guideline, thus enabling easy work of putting the articles into the bag.

### ADVANTAGEOUS EFFECT OF THE INVENTION

According to a method for disposing of a data recording means of the present invention, disposal of the means is entrusted to and carried out by someone other than the client efficiently, securing confidentiality of data recorded on the means such as an optical recording medium and a data recording paper.

A recovery box of the present invention is folded flat and takes little space when not in use, and is set up to put an article therein readily when in use, so that the article is efficiently put in the box.

### BRIEF DESCRIPTION OF THE DRAWINGS

Fig. 1 is a schematic diagram showing procedures (a) to (c) for preliminary process to be performed on a recovery box to be employed in a method for disposing of data recording media (data recording means) relating to an embodiment of the present invention;
Figs. 2A and 2B each are a perspective view of a cable tie (strap) for use in the preliminary process in Fig. 1;
Fig. 3 is a schematic diagram showing procedures (a) to (d) for putting data recording media into the preliminarily-processed recovery box in Fig. 1 and sealing the box;
Figs. 4A and 4B each are a schematic diagram of a seal-determining sticker;
Fig. 5 is a schematic diagram showing procedures (a) to (c) for delivering the sealed box in Fig. 3 from a delivery source to a destination (i.e., an operation site);
Fig 6 is a schematic diagram showing procedures (a) to (d) to be performed on the box delivered to the operation site with the box sealed;
Fig. 7 is a schematic diagram showing procedures (a) to (g) to be performed at the operation site on the data recording media having been taken out of the recovery box;
Fig. 8 is an exploded perspective view of a modified embodiment of the bag shown in Fig. 1(a);
Fig. 9 relates to another embodiment of the present invention and is a schematic diagram showing procedures (a) to (d) for delivering a recovery box from a delivery source to a destination (i.e., an operation site) in a method for disposing of a data recording means;
Fig. 10 is a schematic diagram showing procedures (a) and (b) to be performed on the box delivered to the operation site with the box sealed;
Fig. 11 is a basic circuit diagram of a data recording media disposal apparatus to be employed in a method for disposing of a data recording means relating to an embodiment of the present invention;
Fig. 12 is a graph showing intensity of a magnetic field to be generated in the disposal apparatus in Fig. 11;
Fig. 13 is an exploded perspective view showing a structure of the disposal apparatus in Fig. 11;
Fig. 14 is a schematic diagram of a metal-separating device for separating a metal part of an optical data recording medium and to be employed in the method for disposing of the data recording medium (data recording means) relating to an embodiment of the present invention;
Fig. 15 is a perspective view showing an essential part of the metal-separating device in Fig. 14; and
Fig. 16 is a perspective view of a disk retainer for retaining optical data recording media and to be employed in the metal-separating device in Fig. 14.

### DESCRIPTION OF THE PREFERRED EMBODIMENTS

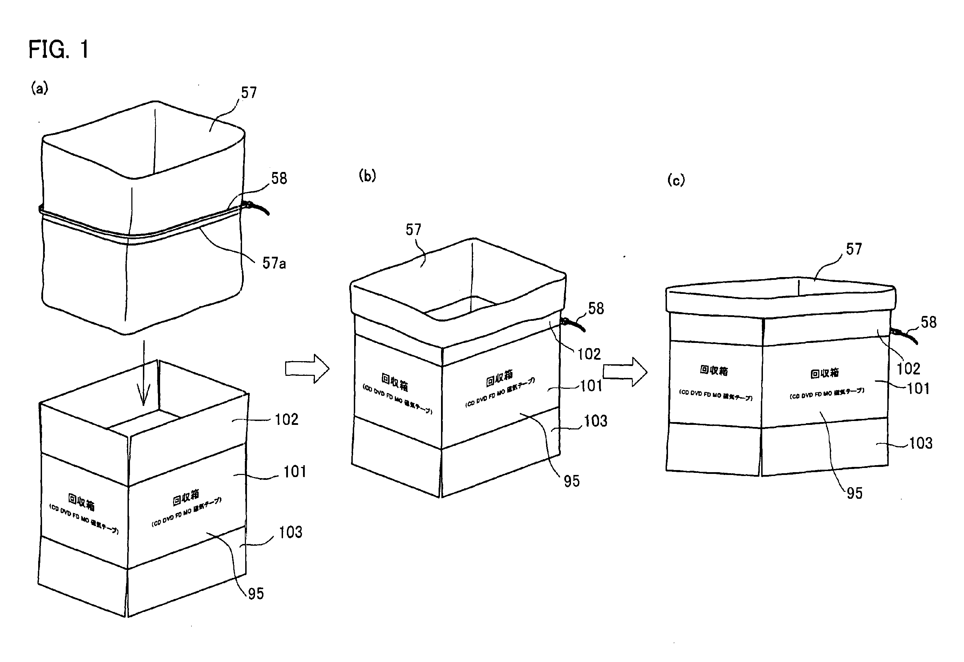

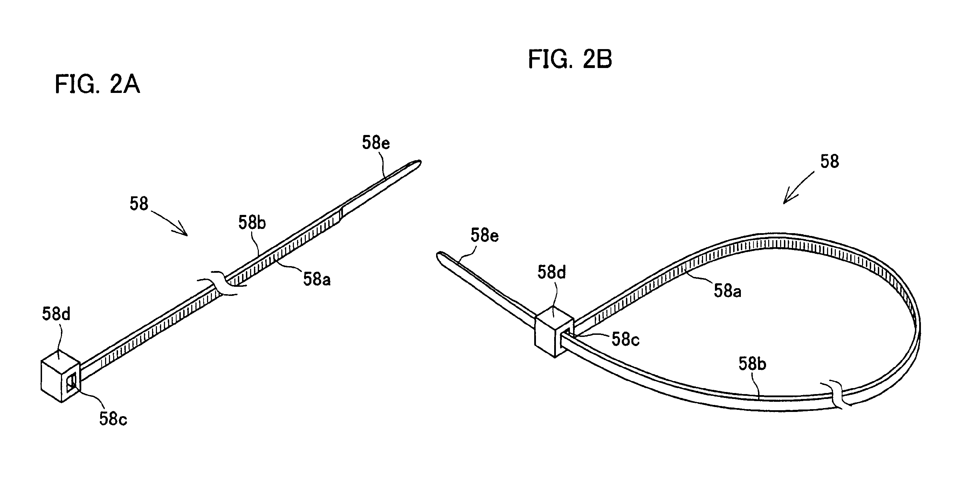

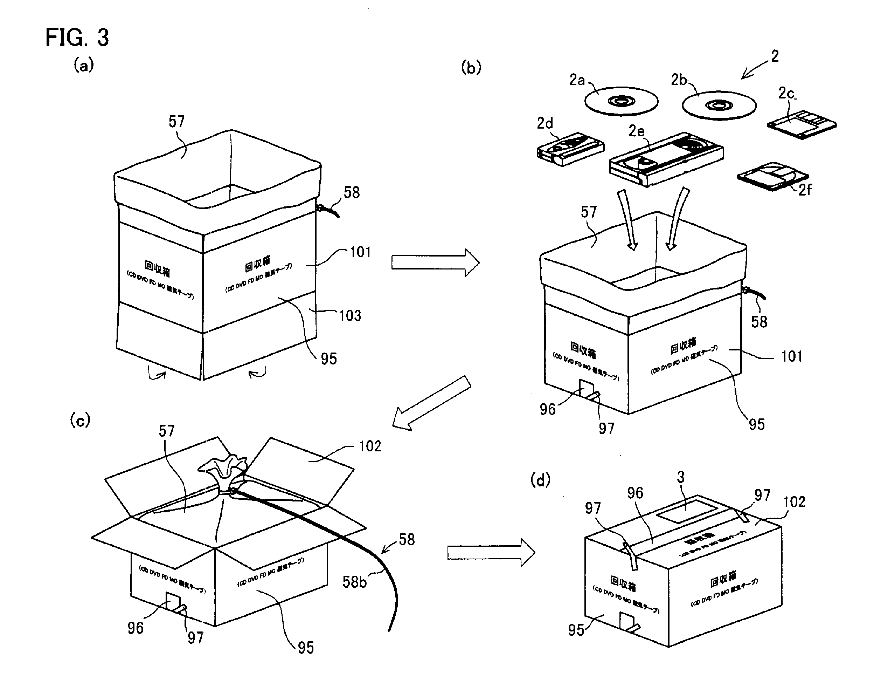

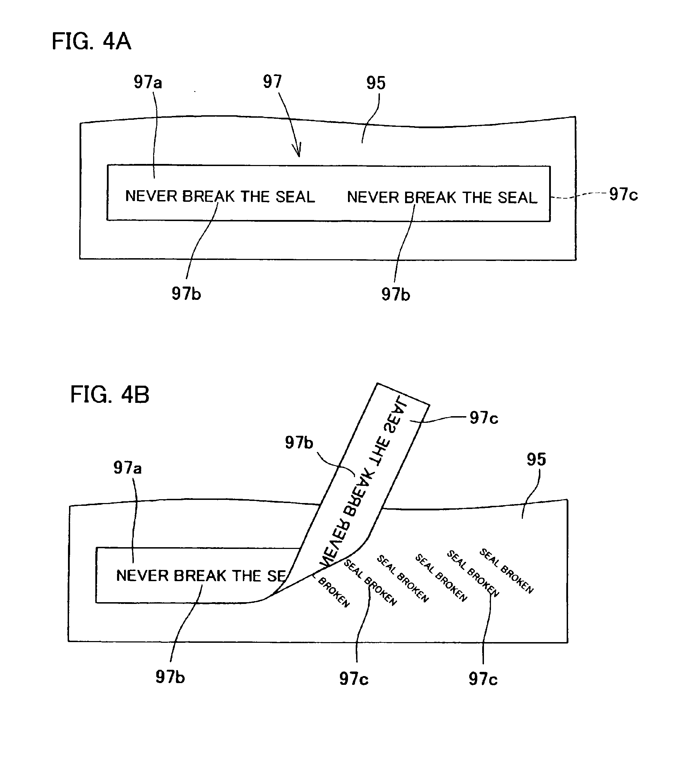

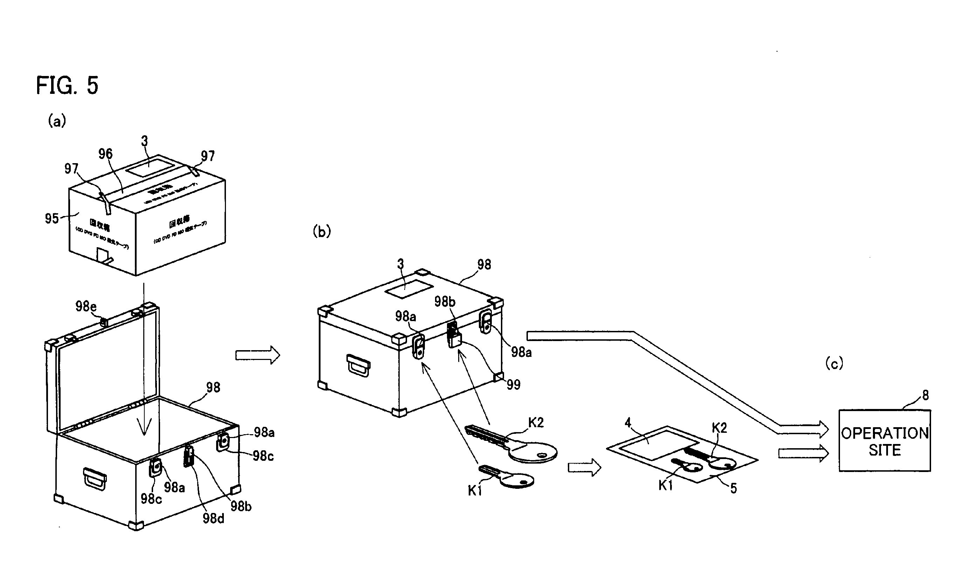

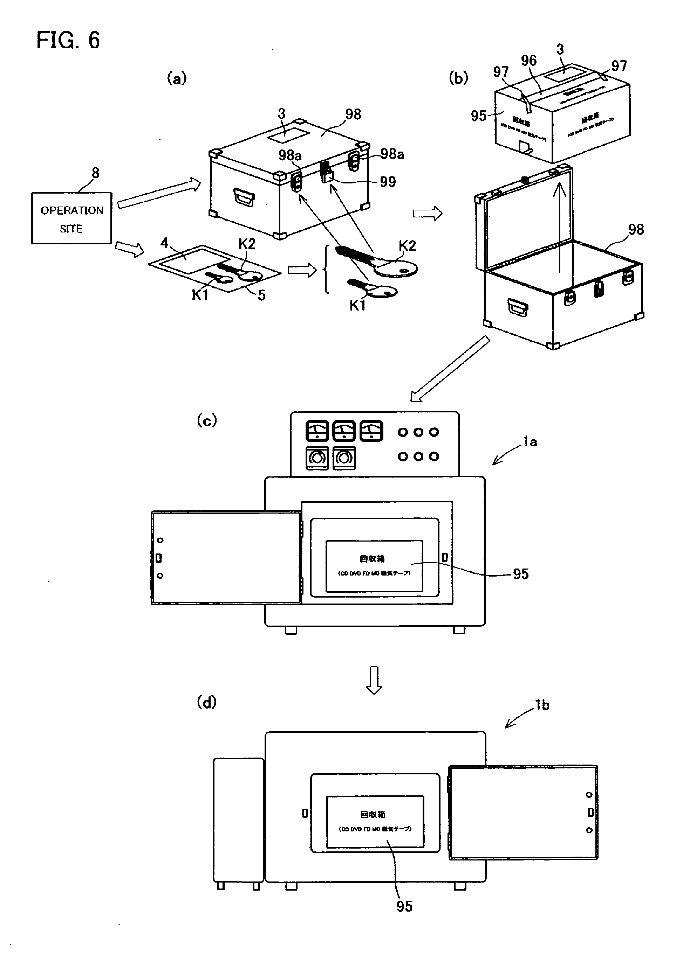

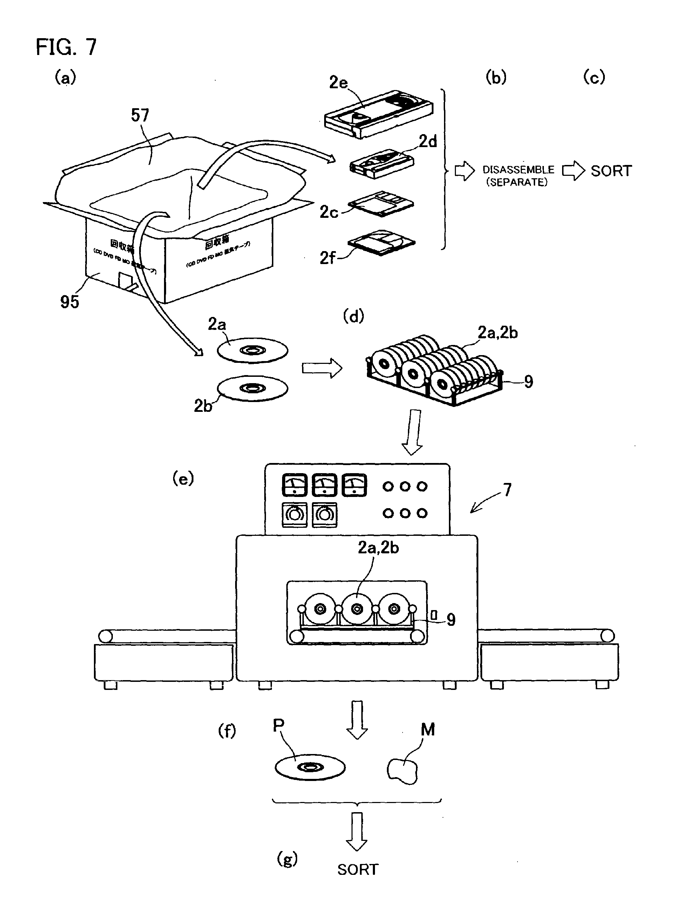

Now, preferred embodiments of the present invention will be described below, referring to the accompanying drawings. Fig. 1 is a schematic diagram showing procedures for preliminary process to be performed on a recovery box to be employed in a method for disposing of data recording media (data recording means) relating to an embodiment of the present invention. Figs. 2A and 2B each are a perspective view of a cable tie (strap) for use in the preliminary process in Fig. 1. Fig. 3 is a schematic diagram showing procedures for putting data recording media into the preliminarily-processed recovery box in Fig. 1 and sealing the box. Figs. 4A and 4B each are a schematic diagram of a seal-determining sticker. Fig. 5 is a schematic diagram showing procedures for delivering the sealed box in Fig. 3 from a delivery source to a destination (i.e., an operation site). Fig 6 is a schematic diagram showing procedures to be performed on the box delivered to the operation site with the box sealed. Fig. 7 is a schematic diagram showing procedures to be performed at the operation site on the data recording media having been taken out of the recovery box.

In a method for disposing of a data recording medium (data recording means) of the present embodiment, a recovery box 95 preliminarily processed is provided from a disposal company to a client who asks disposal.
The box 95 to be employed in the present embodiment is of a box shape and has four peripheral walls 101 joining side to side, four top flaps 102 joining upper sides of the peripheral walls 101 respectively, and four bottom flaps 103 joining lower sides of the peripheral walls 101 respectively. The preliminary process is performed in the following procedures.

First, as shown in Fig. 1(a) and (b), a circularly-connected cable tie (strap) 58 is bound around an outer periphery of a bag 57. Then, the top flaps 102 and the bottom flaps 103 of the box 95 are opened, so that the bag 57 around which the cable tie 58 is bound is inserted into the box 95. At this time, an end of the cable tie 58 is made projected from between two adjacent top flaps 102.

The cable tie 58 is, as shown in Fig. 2(a), integrally formed by an elongated strap body 58b with ratchet teeth 58a on one surface and a locking part 58d with a pawl 58c at its proximal end. As shown in Fig. 2B, when a tip 58e of the cable tie 58 is pulled through the locking part 58d with the strap body 58b bent such that the ratchet teeth 58a are inwardly oriented, the cable tie 58 is movable in a direction in which the strap body 58b is further pulled past the locking part 58d and is prevented from being pulled back due to the engagement of the pawl 58c of the locking part 58d with the ratchet teeth 58a. Specifically, the cable tie 58 is movable in a direction in which the strap body 58b is fastened and is prevented from moving in a direction in which the strap body 58b is loosened.

The bag 57 is inserted into the recovery box 95 with the cable tie 58, followed by, as shown in Fig. 1(b), folding back of an opening of the bag 57 protruding from the top flaps 102 of the recovery box 95 outwardly along the top flaps 102. Then, as shown in Fig. 1(c), the recovery box 95 is folded flat (knocked down) such that the adjacent peripheral walls 101 come close each other.
According to the above-mentioned procedures, the preliminary process onto the recovery box 95 is finished.
In the preliminarily-processed recovery box 95, the bag 57 around which the cable tie 58 is bound is arranged within the folded recovery box 95, so that the box 95 takes little space when not in use because of being flat.

The present embodiment uses a cardboard box as the recovery box 95 and a vinyl plastic as the bag 57, on which, as shown in Fig. 1(a), a guideline 57a for providing an indication of a maximum acceptable amount all around its outer peripheral surface is preliminarily printed.

Referring to Fig. 3(a) and (b), the client having received the preliminarily-processed recovery box 95 from the company opens the peripheral walls 101 of the folded recovery box 95 into a rectangular-box shape and closes the bottom flaps 103. A packaging tape 96 is attached to the closed bottom flaps 103 from one side face to the other of the box 95 lengthwise, i.e., along a line where the major flaps 103 meet. Further, a seal-determining sticker (sealing means) 97 is attached to at least one end of the length direction of the box 95, the sticker 97 crossing the tape 96 and extending from the bottom face to the side face of the box 95.
Thereby, only setting up of the preliminarily-processed recovery box 95 into a box shape allows the box 95 to immediately accommodate data recording media with the bag 57 and the cable tie 58 placed.

The seal-determining sticker 97 consists of a sealing member 97a with a set of letters 97b such as "NEVER BREAK THE SEAL" printed on its front surface, as shown in Fig. 4A, and with silver-color starch 97c applied onto its back surface. The sticker 97, as shown in Fig. 4A, can be attached onto a surface of the recovery box 95 by pressing, like ordinary sealing stickers. However, if the sticker 97 once attached is removed, as shown in Fig. 4B, part of the starch 97c applied onto the back surface of the sealing member 97a remains, adhered, onto the box 95, the adhered starch 97c showing letters such as "SEAL BROKEN". The sticker 97 once removed cannot be attached onto the box 95 again by pressing.

As shown in Fig. 3(b), after the packaging tape 96 and the seal-determining sticker 97 are attached to the bottom face of the box 95 to form the box 95 in the shape of box, data recording media 2 to be disposed of are put into the recovery box 95 one after another.

The data recording media 2 to be contained includes optical data recording media (optical recording media) such as DVDs 2a and CDs 2b and/or magnetic data recording media (magnetic recording media) such as flexible disks (FDs) 2c, 8 mm video tapes 2d, VHS video tapes 2e, and magneto-optical recording disks 2f. These are contained suitably in the bag 57 within the recovery box 95. Each of the data recording media 2 may be put into the bag 57 within the recovery box 95, enclosed in its outer casing, or without the casing.
The data recording media 2 to be contained should be below the guideline 57a printed on the bag 57 as an indication.

Herein, the recovery box 95 employed in the present embodiment has letters of a "Recovery Box" and "(CD, DVD, FD, MO, Magnetic Tape)" on its all faces excluding the bottom face. These are for showing clearly that the recovery box 95 is for containing the data recording media 2 (2a to 2f) excluding a data recording paper, which will be described later.

The recovery boxes 95 of the present embodiment have two sizes, i.e., large and small. A "large recovery box" has a length of 430 mm, a width of 300 mm, and a height of 280 mm, with a capacity of accommodating a maximum weight of 20 kg, approximately. The "large recovery box" can accommodate approximately 178 CDs with 12 cm diameter each housed in a 10 mm thick plastic casing. A "small recovery box" has a length of 260 mm, a width of 280 mm, and a height of 190 mm, with a capacity of accommodating a maximum weight of 10 kg, approximately.

After the data recording media 2 are put in the recovery box 95, as shown in Fig. 3(b), the opening of the bag 57 folded back outwardly along the top flaps 102 of the box 95 is bound and the strap body 58b of the cable tie 58 is fastened, as shown in Fig. 3(c), so that the opening of the bag 57 is fastened. Then, the elongated strap body 58b is bent to be put into the box 95, and the top flaps 102 are closed.

Thereafter, as shown in Fig. 3(d), the packaging tape 96 is attached to the top flaps 102 from one side face to the other of the box 95 lengthwise, i.e., along a line where the major flaps 102 meet. Further, the seal-determining stickers 97 are attached to both ends of the length direction of the box 95, each of the stickers 97 crossing the tape 96 and extending from the top face to the side face of the box 95.
By these procedures, the recovery box 95 is sealed, containing the data recording media 2 to be disposed of, as shown in Fig. 3(d). A delivery label (or delivery slip) 3 showing necessary items such as names and addresses of the destination and the delivery source is attached to the top face of the box 95.

The attachment of the stickers 97 onto the recovery box 95 as shown in Fig. 3(d) prevents opening of the box 95 without remaining a trace thereon. In other words, the attachment of the stickers 97 enables an immediate determination on whether seal of the box 95 has been broken.

Then, as shown in Fig. 5(a), the sealed recovery box 95 is housed in a dedicated carrying case 98. The carrying case 98 is made of aluminum or duralumin in this embodiment and accommodates the whole recovery box 95 as it is. The case 98 may be made of reinforced plastics, instead of metal.

The carrying case 98 has a "central locking portion" 98b and two "side locking portions" 98a, 98a arranged on both sides of the central locking portion 98b. The side locking portions 98a, 98a each has such a configuration that a lever 98c is engaged with a lid on closure of the lid and the lever 98c is prevented from releasing the engagement by means of locking up with a first key K1. The central locking portion 98b has such a configuration that an engaging ring 98d is engaged with an engaging portion 98e on the lid and locked up by a cylinder lock 99 inserted into an opening formed in the engaging portion 98e.

As shown in Fig. 5(b), the sealed recovery box 95 is contained in the carrying case 98, the locking portions 98a, 98a locked up with the first key K1, and the locking portion 98b locked up with a second key K2 for the cylinder lock 99. Then, a copied delivery label 3 of the original delivery label attached to the box 95 as shown in Fig. 3(d) is attached onto a top face of the carrying case 98. The keys K1 and K2 are contained in a key-carrying bag 5, to which a delivery label 4 showing necessary items such as names and addresses of the delivery source and the destination and the number of the carrying case 98 is attached.
Then, as shown in Fig. 5(b) and (c), the carrying case 98 and the key-carrying bag 5 are sent out to the operation site 8 separately. By the procedures described above, the sending-out operation of the data recording media 2 at the delivery source (i.e., client side) is finished.

On the other hand, as shown in Fig. 6(a), the destination (operation site) 8 receives the carrying case 98 and the key-carrying bag 5, which have been delivered separately. The key-carrying bag 5 corresponding to the carrying case 98 is found out, referring to the delivery labels 3, 4 attached onto the case 98 and the bag 5. Then, the locking portions 98a, 98a, 98b of the case 98 are released with the keys K1 and K2. As shown in Fig. 6(b), the recovery box 95 is taken out, maintaining sealed status, from the case 98. The carrying case 98 will be sent back to the delivery source or reserved at the operation site 8, according to instructions from the delivery source.

Then, as shown in Fig. 6(c), the recovery box 95 having been taken out from the carrying case 98 is set to an optical-data destroying device 1a, maintaining sealed status. The optical-data destroying device 1a is operated to radiate a microwave to the sealed box 95 so as to destroy an optical data recorded in the optical recording media (DVD 2a and CD 2b) contained in the box 95.
After the operation by the optical-data destroying device 1a is finished, the sealed recovery box 95 is taken out of the device 1a and stamped "OPTICAL DATA DESTROYED".

Then, the recovery box 95 having been taken out is set in a magnetic-data erasing device 1b as shown in Fig. 6(d), maintaining sealed status. The magnetic-data erasing device 1b is operated to apply a magnetic field to the sealed box 95 so as to erase a magnetic data recorded in the magnetic recording media (FD 2c, video tape 2d, 2e, and MO 2f) contained in the box 95. After the operation by the magnetic-data erasing device 1b is finished, the sealed recovery box 95 is taken out of the device 1b and stamped "MAGNETIC DATA ERASED". Through the procedures described above, data recorded in any data recording media 2 contained in the recovery box 95 is rendered unreadable as the data is destroyed or erased.

After the step of disposing of data is finished by stamping "OPTICAL DATA DESTROYED" and "MAGNETIC DATA ERASED", as shown in Fig. 7(a), the recovery box 95 is opened. Then, the cable tie (see Fig. 3(c)) 58 is cut to open the bag 57, and the data recording media 2 contained therein are taken out of the bag 57 and sorted according to kinds. Among the sorted data recording media 2, FDs 2c, 8 mm video tapes 2d, VHS video tapes 2e, and MOs 2f are disassembled, separated and sorted into plastic, metal, and paper fragments, etc., as shown in Fig 7(b) and (c). The cases in which the data recording media 2 are enclosed are also separated into plastic and paper fragments, etc.
Among the separated materials, plastics are crushed to form pellets suitable for recycling, metals are melted and re-formed to form metal pellets suitable for recycling, and paper is dissolved and refined to be a recycling material.

As shown in Fig. 7(d), among the sorted data recording media 2, DVDs 2a and CDs 2b are held by a dedicated disk retainer 9 one after another. The disk retainer 9 with a number of DVDs 2a and CDs 2b is set to a metal-separating device 7, as shown in Fig. 7(e).
Then, the metal-separating device 7 is operated to radiate a microwave to the DVDs 2a and the CDs 2b so as to melt metal layers on the DVDs 2a and the CDs 2b so that the melted metal is separated from plastic members.
By this operation, as shown in Fig. 7(f), the DVDs 2a and the CDs 2b are separated into a plastic material P (for example, polycarbonate) and a melted metal material M, each material collected to be used as a recycling material.

Herein, the DVDs 2a and the CDs 2b may be subjected to a scraper (not shown) instead of the metal-separating device 7, so as to scrape off a metal part from plastic members of the data recording media 2.

As described above, by the method for disposing of data recording media of the present embodiment, the recovery box 95 sealed at the delivery source is delivered to the operation site (i.e., destination) 8, and a sealed status is maintained until data in the data recording media 2 contained in the box 95 is rendered completely unreadable. This enables a disposal of data recording media 2 containing data even with high level of secrecy, entrusting to a non-client third party, with securing data confidentiality.

The data recording media 2 that have been subjected to the operation for destroying or erasing data can be separated and sorted according to materials and processed to form a shape suitable for recycling, thus achieving systematic recycling operations, which cannot be achieved in the client side.

In the present embodiment, the sealed recovery box 95 is delivered while being contained in the locked-up carrying case 98. However, the subject invention is not restricted by such a form of embodiment.
For example, the sealed recovery box 95 may be delivered without being contained in the case 98. By such a form of embodiment, complete protection of the box 95 from unauthorized seal breakage is not achieved, but the seal breakage is restrained by attachment of the stickers 97, as breakage of seal is easily determined.

Alternatively, the recovery box 95 may be delivered in a simplified form in which the box 95 is sealed with only the packaging tape 96. Such a form may be suitably employed in delivering data recording media with low level of secrecy, though breakage of seal is difficult to be determined in this form.

Though a cardboard box is employed as the recovery box 95 in the present embodiment, a wooden box or a plastic case through which an electromagnetic wave or a magnetic field line can pass may be used as the recovery box. Such wooden box or plastic case may have a configuration in which the box or the case is lockable so as to prevent unauthorized breakage of seal during delivery.

The operation site (destination) 8 may issue, to the delivery source, a disposal certificate showing completion of disposal operation upon completion of the disposal of the recovery box 95. The delivery source can be assured that disposal and recycling operations are certainly carried out, securing data confidentiality, by the issuance of such a certificate.

In the present embodiment, the preliminarily-processed recovery box 95 shown in Fig. 1 is used to contain the data recording media 2, but this recovery box 95 can be used not only for disposing of data recording media in the embodiment, but also for other transportations.
The preliminarily-processed recovery box 95 can be used as a container for transporting articles with taking little space when not in use, and further, it is easy to set up the box 95 so as to contain articles therein. That achieves an improved efficiency of containing work.

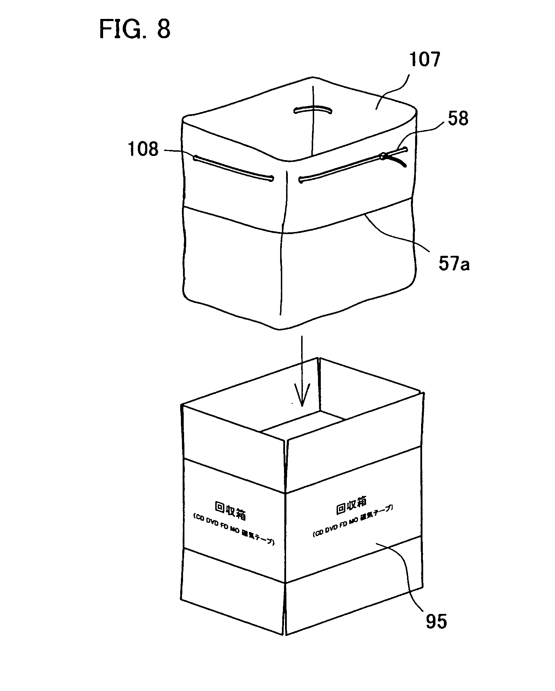

The preliminarily-processed recovery box 95 of the present embodiment is provided with the circularly-connected cable tie 58 bound around the outer periphery of the bag 57, but may have such a configuration as shown in Fig. 8. Fig. 8 is an exploded perspective view of a modified embodiment of the bag shown in Fig. 1(a). A bag 107 shown in Fig. 8 has a plurality of holes 108 in addition to a guideline 57a. A cable tie 58 is circularly connected through the holes 108. Therefore, the cable tie 58 is never unbound from the bag 107 shown in Fig. 8. Consequently, the bag 107 is extremely certainly fastened at its outer periphery with the cable tie 58. Herein, the recovery box 95 into which the bag 107 is inserted is subjected to the preliminary process by the procedures similar to those shown in Fig. 1(a) to (c).

In the above-mentioned embodiment, the procedures for disposal of optical recording media 2a, 2b and/or magnetic recording media 2c to 2f are described. However, the subject invention is not limited to disposal of such data recording media 2, but may also be used in disposal of data recording paper (data recording media) 6 on which data is recorded.

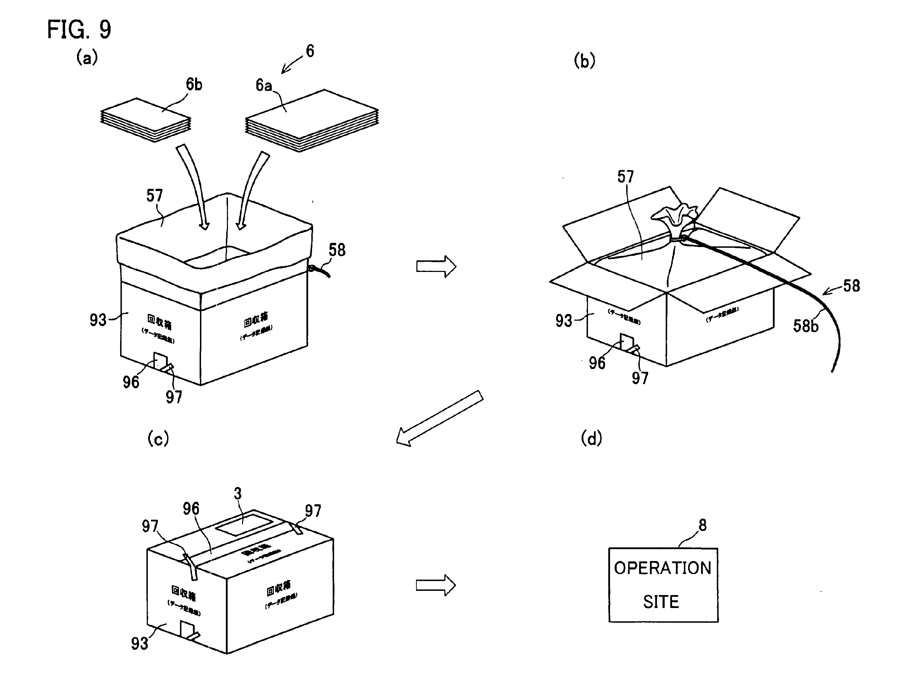

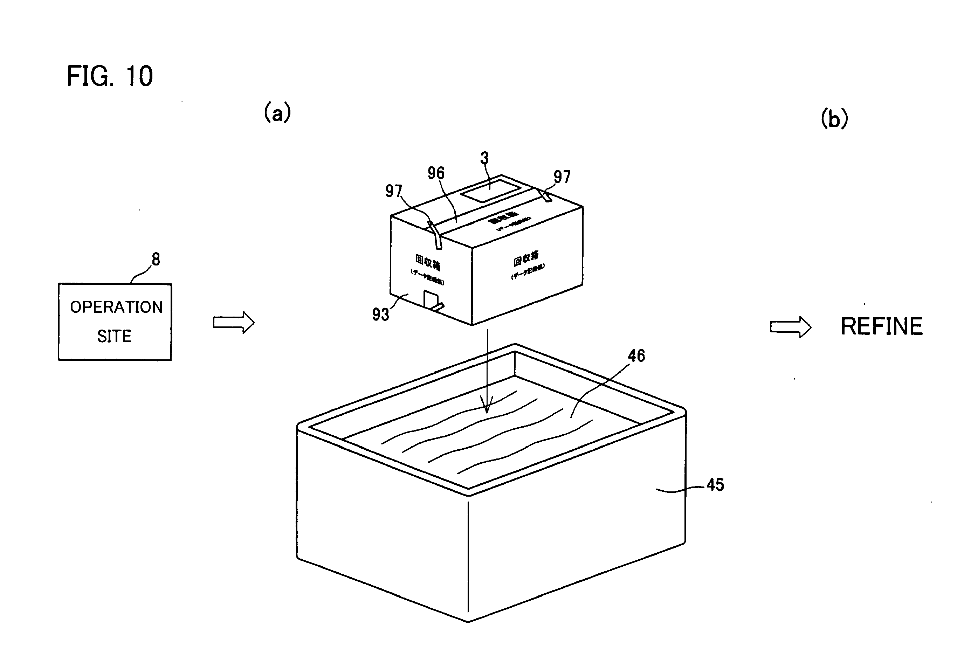

Procedures for disposing of data recording paper 6 are described below, referring to Figs. 9 and 10.
Fig. 9 relates to another embodiment of the present invention and is a schematic diagram showing procedures for delivering a recovery box from a delivery source to a destination (i.e., an operation site) in a method for disposing of a data recording means. Fig. 10 is a schematic diagram showing procedures to be performed on the box delivered to the operation site with the box sealed.

Also in the present embodiment, similarly to the above-mentioned embodiment, a recovery box 93 preliminarily processed is provided from a disposal company to a client who asks disposal. The recovery box 93 is preliminary processed in a similar way to that for the recovery box 95 shown in Fig. 1.

Herein, a bag 57 put into the recovery box 93 is made of paper having flexibility and durability. The recovery box 93 has letters of a "Recovery Box" and "Data Recording Paper" on its all faces excluding the bottom face. These are, as described below, for distinguishing the recovery box 93 and the above-described recovery box 95 for containing data recording media 2 (2a to 2f), because the recovery box 93 itself is also to be dissolved at the operation site.

The recovery boxes 93 of the present embodiment have two sizes, i.e., large and small, similarly to the recovery boxes 95 of the former embodiment. A large recovery box can accommodate at most about 900 sheets of A4 size regular paper.

The preliminarily-processed recovery box 93 is set up in the shape of box by the procedures similar to those shown in Fig. 3(a) and (b).
Then, as shown in Fig. 9(a), a client who asks the disposal (i.e., the delivery source) packs the bag 57 in the recovery box 93 with data recording paper 6a and delivery labels 6b to be disposed of one after another.

After the data recording paper 6 to be discarded is packed into the recovery box 93, as shown in Fig. 9(b) and (c) by the procedures similar to those shown in Fig. 3(b) and (c), the bag 57 is fastened with a cable tie 58, top flaps of the box 93 are closed, the box 93 is sealed by a packaging tape 96, and seal-determining stickers 97, 97 for determining breakage of seal are further attached to the box 93. By the procedures described above, the recovery box 93 is sealed, containing the data recording paper 6 to be discarded, as shown in Fig. 9(c).

Then, a delivery label 3 showing necessary items such as names and addresses of a delivery source and a destination is attached to a top face of the box 93. As shown in Fig. 9(d), the sealed recovery box 93 is forwarded to an operation site 8. By the procedures described above, forwarding operation of the data recording paper 6 at the delivery source (client side) is completed.

At the destination (operation site) 8 to which the recovery box 93 has been forwarded, as shown in Fig. 10(a), the box 93 is immersed, maintaining sealed status, in a dissolving liquid 46 filled within a dissolution tank 45 so that the box 93 is dissolved together with the data recording paper 6 contained in the bag 57. Cellulose originated from dissolved data recording paper 6 etc. is refined so as to form a recycled material, as shown in Fig. 10(b).
Before the box 93 is put into the tank 45, the delivery label 3 attached to the box 93 is removed from the box 93 and reserved so as to record the fact that dissolution is performed.

As described above, by the method for the present embodiment for disposing of data recording media, the recovery box 93 sealed at the delivery source is delivered to the operation site 8 (i.e., the destination) and is dissolved, maintaining sealed status. This enables a disposal of data recording paper 6 containing data even with high level of secrecy, entrusting to a non-client third party, with securing data confidentiality.
The dissolved data recording paper 6 is refined so as to be in a form suitable for recycling, thus enabling a systematic recycling, which is impossible for the client side.

In the present embodiment, the sealed recovery box 93 is delivered to the operation site 8 without being contained in a case. However, the sealed recovery box 93 may be delivered while being contained in the above-described lockable carrying case 98 (as shown in Fig. 5). By such a form of embodiment, protection of the box 93 from unauthorized seal breakage during delivery is achieved, thus enabling safe delivery and disposal of data recording paper 6 having high level of secrecy.

Alternatively, the present embodiment may have such a simplified configuration as sealing the recovery box 93 only with a general-purpose packaging tape and without the seal-determining stickers (sealing means) 97. Such a configuration may be suitably employed in discarding data recording paper with low level of secrecy because of easy packaging, though breakage of seal is difficult to be determined in this configuration.

Also in the present embodiment, the operation site (destination) 8 may issue, to the delivery source, a disposal certificate showing completion of the disposal upon completion of the dissolution of the recovery box 93. The delivery source is assured, by the issuance of such a certificate, that disposal and recycling operations are certainly carried out, securing data confidentiality.

Further, also in the present embodiment, a bag 107 shown in Fig. 8 may be used instead of the bag 57.

Now, specific forms of the above-described embodiments of an optical-data destroying device 1a (as shown in Fig. 6(c)), a magnetic-data erasing device 1b (as shown in Fig. 6(d)), and a metal-separating device 7 will be described below.
The optical-data destroying device 1a in Fig. 6(c) and the magnetic-data erasing device 1b in Fig. 6(d), being discrete devices in the former embodiment, are described hereinafter as an integrated data recording media disposal apparatus 1 having both functions of optical data destruction and magnetic data erasure.

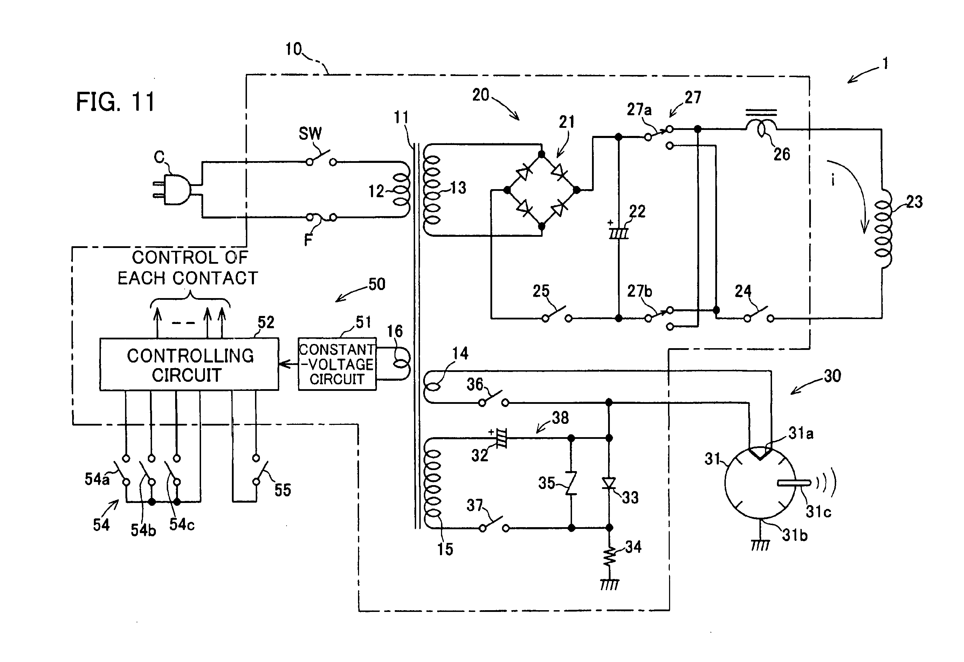

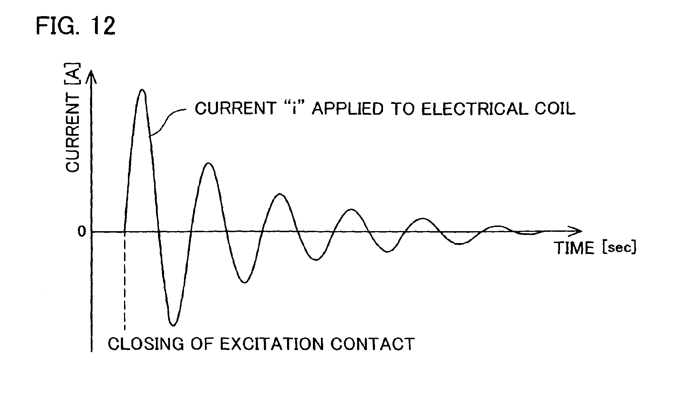

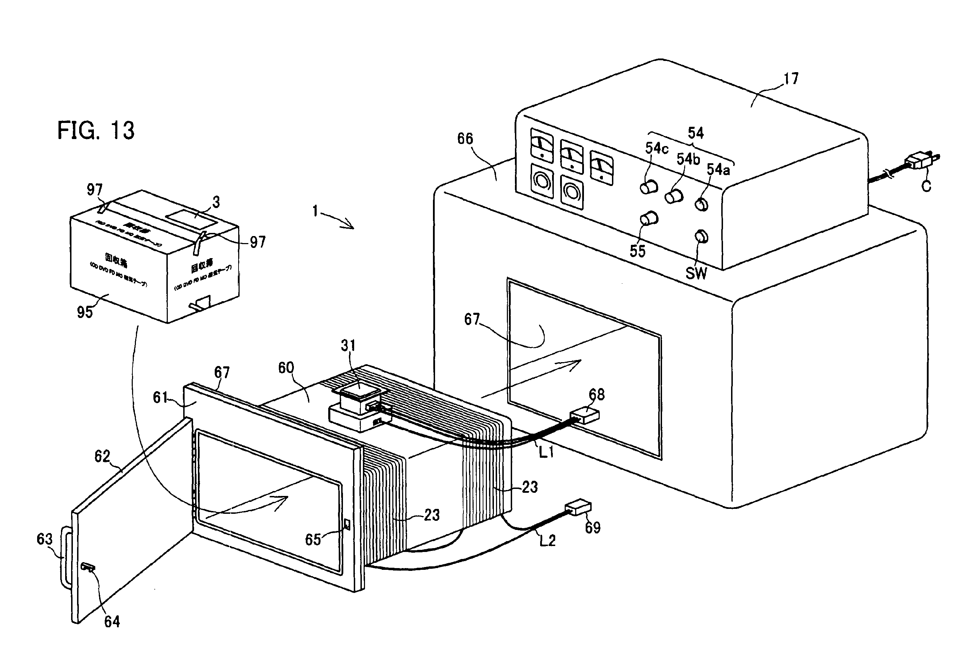

Fig. 11 is a basic circuit diagram of a data recording media disposal apparatus 1 to be employed in a method for disposing of a data recording means relating to an embodiment of the present invention. Fig. 12 is a graph showing intensity of a magnetic field to be generated in the disposal apparatus 1 in Fig. 11. Fig. 13 is an exploded perspective view showing a structure of the disposal apparatus 1 in Fig. 11.

As shown in Fig. 11, the disposal apparatus 1 is generally made up of portions consisting of a magnetic field generator 20, an electromagnetic wave generator 30, a controller 50, and a transformer (power supply) 11 for supplying an AC power to the other portions.
As shown in Fig. 11, the transformer 11 is for generating AC voltages necessary for the other portions upon receipt of the commercial source (AC100V). The transformer 11 has a primary winding 12 connected to the power source (AC100V), a secondary winding 13 connected to the field generator 20, further secondary windings 14 and 15 connected to the electromagnetic wave generator 30, and a still further secondary winding 16 connected to the controller 50. The primary winding 12 of the transformer 11 is connected to a power plug C via a power switch SW and a fuse F.

The field generator 20 has a function of generating an attenuating alternating magnetic field by discharging electricity stored in a capacitor 22 through an electrical coil 23, as shown in Fig. 11. The field generator 20 has a bridge diode 21 connected to the secondary winding 13 so that a rectified output of the diode 21 is supplied to the capacitor 22 via a "charging contact" 25. Both ends of the capacitor 22 are connected, via a "polarity reverser" 27, to a circuit containing a reactor 26, the coil 23, and an "excitation contact" 24 in series.

A polarized electrolytic capacitor is used as the capacitor 22. The reactor 26 connected in series to the coil 23 has a function of stabilizing current applied to the coil 23. The polarity reverser 27, consisting of two contacts 27a and 27b switched in conjunction with each other, has a function of reversing direction of current flowing from the capacitor 22 to the coil 23 by switching the contacts 27a and 27b. Opening and closing of the contacts of the field generator 20, i.e., the charging contact 25, the excitation contact 24, and the contacts 27a and 27b of the polarity reverser 27, are controlled by the controller 50 described below.

The field generator 20 generates an attenuating alternating magnetic field by operations described below. At first, with the excitation contact 24 opened, the charging contact 25 is closed so as to charge the capacitor 22 until a charged voltage of the capacitor 22 reaches the peak value of full-wave rectified voltage by the bridge diode 21. Time duration required for the charging is determined by the capacitance of the capacitor 22 and a winding resistance of the secondary winding 13 of the transformer 11.

After completion of charging of the capacitor 22, the charging contact 25 is opened. At this moment, the capacitor 22 is fully charged, with its terminal voltage substantially equal to the peak value of full-wave rectified voltage by the bridge diode 21. Then, closure of the excitation contact 24 makes a rapid discharge of the electricity charged in the capacitor 22 through the coil 23. Herein, the capacitor 22 and the coil 23 are connected in series so as to form a series resonant circuit. Therefore, with the excitation contact 24 closed, an attenuating alternating current "i" flows through the coil 23, lowering its wave height with duration of time, as shown in Fig. 12.

A cycle time of the attenuating alternating current "i" flowing through the coil 23 is generally determined by the capacitance of the capacitor 22 and an inductance of the coil 23, whereas its attenuation rate is determined by an internal resistance of the capacitor 22 and a resistance component of the coil 23. In other words, closure of the excitation contact 24 brings about the attenuating alternating current "i" through the coil 23, as shown in Fig. 12, having a cycle time and an attenuation rate determined by the series resonant circuit consisting essentially of the capacitor 22 and the coil 23. The current attenuates, turning its polarity, until its value reaches zero.

Thus, closure of the excitation contact 24 generates, around the coil 23, the attenuating alternating magnetic field, in which magnetic flux density gradually decreases, reversing its poles, as time passes. The magnetic field generator 20 generates the attenuating alternating magnetic field based on the above-described principle and erases a magnetic data recorded on the magnetic recording medium by means of the generated attenuating alternating magnetic field. The magnetic field generator 20 of the disposal apparatus 1 is a circuit that does not generate a strong magnetic field for a long time but generates the attenuating alternating magnetic field whose magnetic flux density decreases as time passes.

The electromagnetic wave generator 30 has a function of generating an electromagnetic wave of a microwave strap. The wave generator 30, as shown in Fig. 11, has a magnetron 31 whose cathode (heater) 31a is connected to the secondary winding (heater winding) 14 of the transformer 11 via a heater current-carrying contact 36. The secondary winding 15 of the transformer 11 is connected to a voltage doubler rectifier circuit 38 formed by a capacitor 32 and a diode 33. A positive output voltage of the voltage doubler rectifier circuit 38 is connected to an anode 31b of the magnetron 31 via a current-limit resistance 34, whereas a negative output voltage of the circuit 38 is connected to the cathode 31a of the magnetron 31.

.
The present embodiment employs a grounded anode circuit in which the anode 31b of the magnetron 31 is grounded. A surge absorber 35 is connected in parallel with the diode 33 of the rectifier circuit 38 so as to absorb a surge voltage generated in the circuit, thus protecting the diode 33 from destruction. Opening and closing of both contacts in the wave generator 30, i.e., the heater current-carrying contact 36 and an anodal current-carrying contact 37, are controlled by the controller 50, which will be described below.

The electromagnetic wave generator 30 generates an electromagnetic wave through the following operations. First, the heater current-carrying contact 36 is closed so as to heat the cathode (heater) 31a of the magnetron 31. This enables the magnetron 31 to emit thermal electrons from the cathode 31a. Then, closure of the anodal current-carrying contact 37 applies a rectified output voltage of the rectifier circuit 38 to the anode 31b of the magnetron 31, so that the magnetron 31 initiates an oscillation so as to radiate an electromagnetic wave of a predetermined strength from its antenna 31 c. The present embodiment uses the magnetron 31 with an oscillating frequency of substantially 4.3 GHz, the electromagnetic wave radiated from the antenna 31 c being a microwave with a frequency of substantially 4.3 GHz and a wave length of substantially 7 cm.

The wave generator 30 generates a microwave by such circuit configuration and has a function of destroying recorded data by applying the generated electromagnetic wave to optical recording media. The present embodiment uses the magnetron 31 having an oscillating frequency of substantially 4.3 GHz, but may use one having an oscillating frequency of substantially 2.45 GHz. By means of a magnetron 31 having one of such frequencies, optical data recorded on optical recording media is efficiently destroyed.

The controller 50, as shown in Fig. 11, includes a constant-voltage circuit 51 and a controlling circuit 52, and has a function of controlling opening and closing of each contact provided in the field generator 20 and the wave generator 30.
The constant-voltage circuit 51 is adapted to supply a stabilized DC voltage to the controlling circuit 52 upon receipt of an AC voltage of the secondary winding 16 of the transformer 11.

The controlling circuit 52 is a circuit adapted for a digital control and provided with a CPU. Either of an operating switch 55 and a mode setting section 54, which includes a magnetic field generating switch 54a, an electromagnetic wave generating switch 54b, and a magnetic field and electromagnetic wave generating switch 54c, is connected to the circuit 52.
Further, the controlling circuit 52 has a configuration capable of separately controlling opening and closing of a plurality of contacts according to a program manipulation, the contacts corresponding to the contacts of the field generator 20 and the wave generator 30 both described above, respectively.

The present embodiment uses mechanically-linked alternate push switches as the switches 54a to 54c of the mode setting section 54, and when one of the switches is pushed in so as to be closed, the other two switches project to be opened. Further, a momentary-type push switch is used as the operating switch 55.

The controlling circuit 52 has such a controlling function as performing program manipulations in response to a setting of the mode setting section 54 and an operation of the operating switch 55 and as generating a magnetic field and/or an electromagnetic wave by an opening and closing control of each of the contacts of the field generator 20 and the wave generator 30 described above.

The disposal apparatus 1 of the present embodiment has the field generator 20, the wave generator 30, and the controller 50 each having the above-mentioned function, and a circuit block 10 specified by a dashed line in Fig. 11 is integrally formed on a circuit board or the like.

Next, a structure of the disposal apparatus 1 of the present embodiment will be described, making reference to Fig. 13. The disposal apparatus 1 includes a container 60 and an outer casing 66 adapted to cover the container 60 from outside.

The container 60, as shown in Fig. 13, is a square-shaped box made of a non-magnetic material and having a cavity therewithin, its front face being opened, its left, right, top, bottom, and rear faces being closed. In the present embodiment, the container 60 is made of a copper (non-magnetic material) plate. The container 60 has the magnetron 31 secured to its central part of the top face. An antenna 31 c (see Fig. 11) of the magnetron 31 protrudes into the inner cavity of the container 60. Wirings L1 for applying a heater voltage and an anode voltage are connected to the magnetron 31, the wirings L1 having a connector 68 connected to a distal end thereof.

The container 60 has an outer wall around which the coil 23 is wound backward from its front face in such a manner as sandwiching the magnetron 31 from both front and rear faces, both ends of the coil 23 being connected to a connector 69 via wirings L2. In the present embodiment, an enamel wire is used as the coil 23 and an insulating sheet (not shown) is interposed between the coil 23 and the outer periphery of the container 60.

The container 60 has a flange 61 made of a magnetic material at a periphery of the front face thereof and a door 62 mounted on the flange 61 so as to cover the front face of the container 60. Specifically, a left edge of the door 62 is pivoted to a left end portion of the flange 61, so as to be openable and closable.
In the present embodiment, iron (magnetic material) plates are used as both the flange 61 and the door 62. The door 62 has a handle 63 at a right end of a front face thereof and a hook 64 protruding backward adjacent to the handle 63. The flange 61 also has an engaging hole 65 corresponding to the hook 64.

As just described, the container 60 is a box having an opening of the front face and made of copper (non-magnetic material), at which opening the flange 61 made of iron (magnetic material) plate is provided, to which flange 61 the door 62 made of iron (magnetic material) plate is openably and closably mounted. An electromagnetic wave absorbing member 67 is attached to an entire rear face of the flange 61. The present embodiment uses as the absorbing member 67 a rubber electromagnetic wave absorbing member that is made by dispersing an iron material having electromagnetic wave absorbability in a synthetic rubber.

The outer casing 66 is a box made of a magnetic material larger than the container 60, part of its front face being opened, its left, right, top, bottom, and rear faces being closed, so as to have a shape capable of accommodating the container 60. Electromagnetic wave absorbing members 67, each similar to that attached to the flange 61, are attached to an entire inner surface of the casing 66. Specifically, the casing 66 is a box made of iron with the electromagnetic wave absorbing members 67 attached to the entire inner surface.

A circuit case 17 housing therein the circuit block 10 shown in Fig. 11 is mounted on a top face of the casing 66. The circuit case 17 provides a power switch SW, the operating switch 55, and three switches 54a, 54b, and 54c of the mode setting section 54 and has an AC code with an AC power plug C pulled out of a rear face of the case 17.

In assembling the disposal apparatus 1, as shown in Fig. 13, the connector 68 connected to the magnetron 31 and the connector 69 connected to the coil 23 are connected to connectors (not shown) provided in the case 17 through openings (not shown) formed on the top face of the casing 66. Then, the container 60 is inserted into the casing 66, whereupon the flange 61 provided at the container 60 is brought into contact with and secured to an opening edge (i.e., front edge) of the casing 66.

In the disposal apparatus 1 assembled in this way, the door 62 of the front face is openable and closable using the handle 63, so that the recovery box 95 is readily taken in and out of the container 60 by opening the door 62.

Now, operations of the disposal apparatus 1 of the present embodiment will be described, making reference to Figs. 4, 11, 12, and 13. Operations for erasing magnetic data are first to be described.
First, the power switch SW is turned on and the field generating switch 54a of the mode setting section 54 is pushed in, so as to set to a magnetic field generating mode. Then, the door 62 is opened so that the recovery box 95 containing data recording media 2 is housed in the container 60. After closure of the door 62, the operating switch 55 is pushed.

Upon actuation of the operating switch 55, the controlling circuit 52 controls the charging contact 25, the excitation contact 24, and the contacts 27a and 27b of the polarity reverser 27 of the field generator 20 in reference to a closing state of the field generating switch 54a of the mode setting section 54. In the magnetic field generating mode, the heater current-carrying contact 36 and the anodal current-carrying contact 37 of the wave generator 30 remain open.

The controlling circuit 52 switches both the contacts 27a and 27b of the polarity reverser 27 to one side, so as to close the charging contact 25 for a predetermined period of time. Thereby, as described above, the capacitor 22 is charged until its charging voltage reaches the peak value of full-wave rectified voltage by the bridge diode 21. After a predetermined period of time from closure of the charging contact 25, the controlling circuit 52 opens the charging contact 25, followed by closure of the excitation contact 24. Thereupon, an electrical charge stored in the capacitor 22 is discharged via the coil 23, to which the above-mentioned attenuating alternating current "i" shown in Fig. 12 is applied to generate an attenuating alternating magnetic field.

As shown in Fig. 13, the coil 23 is wound around the container 60 made of a non-magnetic material (copper plate), the outside of the container 60 being covered with the outer casing 66 made of a magnetic material (iron plate), the front face of the container 60 being covered with the door 62 made of a magnetic material (iron plate). Consequently, the attenuating alternating magnetic field generated in the coil 23 is induced into the inner cavity of the container 60 without being weakened by the container 60 and magnetic field lines leaking out of the container 60 are shielded by the casing 66, the flange 61, and the door 62.
Thereby, the attenuating alternating magnetic field is applied to the container 60. Therefore, the magnetic recording media 2c to 2f contained in the recovery box 95 are exposed to the attenuating alternating magnetic field so that magnetic data recorded therein is erased.

After a predetermined period of time from closure of the excitation contact 24, the controlling circuit 52 opens the excitation contact 24 to complete a series of processes for erasing magnetic data in the magnetic recording media.
The disposal apparatus 1 of the present embodiment achieves erasure of magnetic data in the magnetic recording media housed in the recovery box 95 in a short time. Further, magnetic field lines leaking out are minimized, avoiding undesired effects associated with leaking magnetic field lines.

The controlling circuit 52 makes reverse connection of the contacts 27a and 27b provided at the polarity reverser 27 of the field generator 20 every time of operations for the magnetic field generating mode. Specifically, discharge polarity from the capacitor 22 to the coil 23 is reversed every time of operations for the magnetic field generating mode.
Consequently, even when a magnetic field is induced in the casing 66, which is made of a magnetic material, by a magnetic field generated in the coil 23, resulting in generation of mechanical repulsive or attractive force between the coil 23 and the casing 66, the reverse connection by the polarity reverser 27 reverses the mechanical force in each operation. That prevents displacement of the coil 23 relative to the container 60.

Operations for destroying optical data recorded on optical recording media are next to be described below.
First, the power switch SW is turned on and the wave generating switch 54b of the mode setting section 54 is pushed in so as to set to an electromagnetic wave generating mode. Then, the operating switch 55 is pushed.

Upon actuation of the operating switch 55, the controlling circuit 52 controls the heater current-carrying contact 36 and the anodal current-carrying contact 37 of the wave generator 30 in reference to a closing state of the wave generating switch 54b of the mode setting section 54. In the electromagnetic wave generating mode, the charging contact 25 and the excitation contact 24 of the field generator 20 remain open.

The controlling circuit 52 closes the heater current-carrying contact 36 to heat the cathode (heater) 31a of the magnetron 31. That allows the cathode 31a to be ready to emit thermal electrons. After a predetermined period of time from closure of the heater current-carrying contact 36, the controlling circuit 52 closes the anodal current-carrying contact 37. Thereby, an anode voltage is applied to the anode 31 b from the voltage doubler rectifier circuit 38, so as to radiate a microwave of substantially 4.3 GHz from the antenna 31c into the container 60.

Since the container 60 is made of a non-magnetic material (copper plate) as shown in Fig. 13, the microwave of substantially 4.3 GHz radiated thereinto reflects on the inner surface of the container 60, without leaking out. Further, the front face of the container 60 covered with the door 62 made of a magnetic material (iron plate) prevents the microwave radiated into the container 60 from leaking out. Still further, even in the unlikely event that the electromagnetic wave leaks out of the container 60, the wave absorbing members 67 attached to the inner surface of the outer casing 66 and the rear face of the flange 61 absorb the electromagnetic wave, thereby preventing the electromagnetic wave from leaking out of the casing 66.

The electromagnetic wave radiated into the container 60 is applied to the optical recording media (DVD 2a, CD 2b) contained in the recovery box 95, so as to deform by heat a vapor-deposited aluminum film or pits formed in the media, achieving destruction of optical data in a short time. As described above, the electromagnetic wave leaking out of the container 60 is absorbed by the electromagnetic wave absorbing members 67, so that the electromagnetic wave leaking out of the disposal apparatus 1 is minimized.

After a predetermined period of time from closure of the anodal current-carrying contact 37, the controlling circuit 52 opens the anodal current-carrying contact 37 and the heater current-carrying contact 36 to complete a series of processes for destroying data in the optical recording media.

The disposal apparatus 1 of the present embodiment achieves destruction of optical data in the optical recording media 2a, 2b contained in the recovery box 95 in a short time. Further, an electromagnetic wave leaking out is minimized, avoiding danger to the human body.

Operations for erasing magnetic data recorded in an optical magnetic disk 2f are next to be described.
First, the power switch SW is turned on and the magnetic field and electromagnetic wave generating switch (field-and-wave generating switch) 54c of the mode setting section 54 is pushed in, so as to set to a magnetic field and electromagnetic wave generating mode. Then, the operating switch 55 is pushed.

Upon actuation of the operating switch 55, the controlling circuit 52 controls the charging contact 25 and the excitation contact 24 of the field generator 20 and also controls the heater current-carrying contact 36 and the anodal current-carrying contact 37 of the wave generator 30 in reference to a closing state of the field-and-wave generating switch 54c of the mode setting section 54.

Specifically, setting to the magnetic field and electromagnetic wave generating mode by the mode setting section 54 simultaneously executes the magnetic field generating mode and the electromagnetic wave generating mode by means of the controlling circuit 52, with the effect that the attenuating alternating magnetic filed is applied, and simultaneously the microwave having a frequency of substantially 4.3 GHz is radiated, into the container 60.

Thereby, the optical magnetic disk 2f contained in the recovery box 95 in the container 60 is heated by the radiated microwave and degaussed by the applied attenuating alternating magnetic field in a short time, so that recorded magnetic data is erased. Also in the magnetic field and electromagnetic wave generating mode, as described above, magnetic field lines and an electromagnetic wave are prevented from leaking out of the disposal apparatus 1, so that safety is improved.

The disposal apparatus 1 of the present embodiment achieves erasure of magnetic data recorded in the optical magnetic disk 2f contained in the recovery box 95 in a short time. Further, the electromagnetic wave leaking out is minimized, avoiding danger to the human body.

The description above illustrates the disposal apparatus 1, but the present invention is not limited to the above-mentioned embodiment, and may employ an additional configuration for safety and for operation. For example, the above-mentioned embodiment only closes the door 62 with the hook 64 of the door 62 engaged with the engaging hole 65 of the flange 61. However, it is also possible to have a configuration provided with a detection switch at the engaging hole 65 so that the controlling circuit 52 forces to halt generation of a magnetic field and an electromagnetic wave while the door 62 is open. This configuration prevents a magnetic field or an electromagnetic wave from leaking out even if the door 62 is opened by mistake while a data recording means is undergoing operation, achieving enhanced safety.

Further, for example, it is also possible to improve the usability by a configuration in which indication by a pilot lamp is performed while either a magnetic field or an electromagnetic wave is outputted after actuation of the operating switch 55.

Next, a specific embodiment of a metal-separating device 7 for separating metal part of the optical recording media 2a, 2b will be hereinafter described.

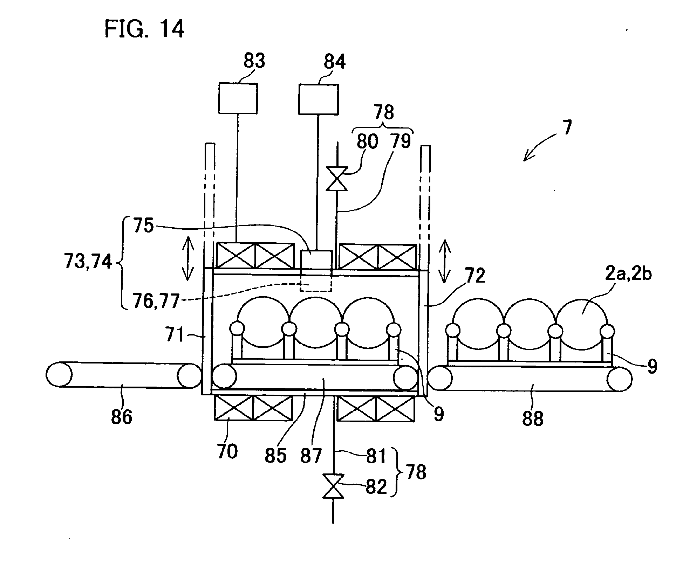

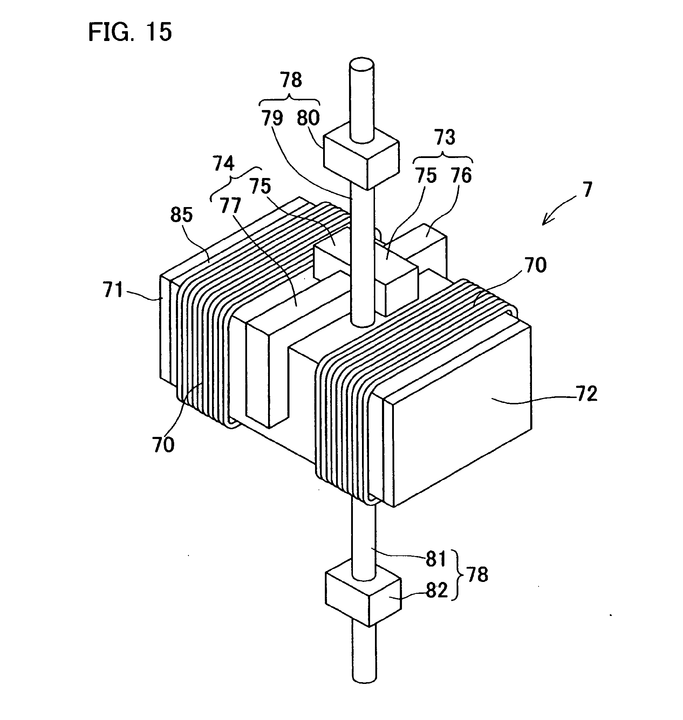

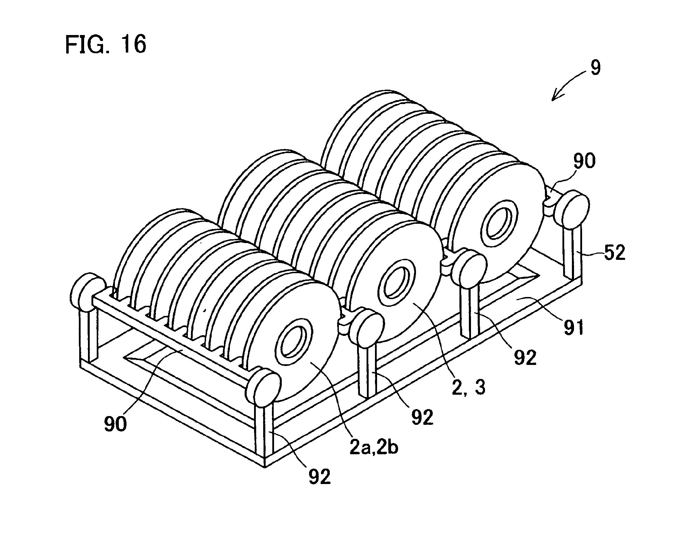

Fig. 14 is a schematic diagram of a metal-separating device 7 for separating a metal part of an optical data recording medium and to be employed in the method for disposing of the data recording medium (data recording means) relating to an embodiment of the present invention. Fig. 15 is a perspective view showing an essential part of the metal-separating device 7 in Fig. 14. Fig. 16 is a perspective view of a disk retainer for retaining optical data recording media and to be employed in the metal-separating device 7 in Fig. 14.

The metal-separating device 7 of the present embodiment consists mainly of an operation chamber 85 for accommodating optical recording media, a first microwave radiator 73 and a second microwave radiator 74 both for radiating a microwave to the optical recording media in the operation chamber 85, a lean-oxygen maintaining unit 78 for maintaining an inner space of the operation chamber 85 at an atmosphere of low oxygen density, and a magnetic field generator 70 consisting mainly of a coil wound around the whole chamber 85.

The operation chamber 85 is made of stainless steel (a nonmagnetic metal), which prevents a microwave radiated thereinto from leaking out and which passes an electromagnetic field from the field generator 70 wound around the chamber 85 so that the field reaches the recording media 2a, 2b (i.e., objects to be disposed of).

The operation chamber 85 is of a cylindrical shape so that optical recording media 2a, 2b retained by a disk retainer 9 may pass through the chamber 85 in back-and-forth directions (right and left directions in the figure). Front and back doors 71, 72, both made of stainless steel, are mounted to both open ends of the chamber 85 so as to close the chamber 85.

The doors 71, 72 close the chamber 85 while a microwave is radiated toward the recording media 2a, 2b, so as to maintain the inner space of the chamber 85 at an atmosphere of low oxygen density as well as to prevent the microwave from leaking out.

The first and second microwave radiators 73, 74 share a microwave generator 75 using a magnetron as well as a branching filter (not shown) for branching a microwave generated by the generator 75. The radiators 73, 74 have waveguides 76, 77, respectively, for guiding branched microwaves to centers of right and left walls of the chamber 85. Lengths of the tubes 76, 77 are designed to be different so that the microwaves having reached the optical recording media 2a, 2b have different phases.

The microwave generator 75 has a microwave intensity controller 84 for controlling intensity of generated microwave. The microwave intensity controller 84 changes a voltage applied to the microwave generator 75 so as to change the intensity of the generated microwave and that of a microwave radiated to the optical recording media.

The lean-oxygen maintaining unit 78 consists mainly of a gas pipe 79, another gas pipe 81, and gas valves 80, 82. The gas pipe 79 is used in introducing carbon dioxide gas into the chamber 85 from a gas cylinder (not shown) storing carbon dioxide gas, the gas pipe 81 is used in discharging air from the chamber 85, and gas valves 80, 82 are connected to the gas pipes 79, 81, respectively, for closing and opening the pipes so as to control flow of gas or air.

The present embodiment employs carbon dioxide gas, which is heavier than air. Therefore, carbon dioxide gas is introduced into the chamber 85 through the pipe 81 connected to a lower part of the chamber 85, whereas air in the chamber 85 is discharged therefrom through the pipe 79 connected to an upper part of the chamber 85.

The magnetic field generator 70 consists mainly of a coil wound a number of times around the entire chamber 85 in a direction crossing to conveyance direction of the optical recording media.

The magnetic field generator 70 has a field intensity controller 83 for controlling intensity of a generated magnetic field. The field intensity controller 83 changes a voltage applied to the coil (i.e., field generator 70) so as to change intensity of the generated field. A capacitor (not shown) is connected to both ends of the coil and in series with the coil so as to absorb surge on supplying electricity to the coil.

As shown in Fig. 16, the disk retainer 9 consists mainly of four holders 90 each having serrated grooves formed thereon, a receiving tray 91, and supporters 92 for supporting the holders 90 above the tray 91. The receiving tray 91 is arranged below the holders 90 for receiving metal melt and flown out from the optical recording media 2a, 2b. The holders 90 are arranged in parallel to each other and supported above the tray 91 by the supporters 92.

The holders 90 are arranged so that a distance from a bottom of any of the grooves to that of an opposing groove is shorter than a diameter of an optical recording medium 2a or 2b to be disposed of, so as to prevent the recording medium from dropping when the recording medium is inserted into grooves of adjoining holders 90, 90.
The grooves are formed substantially vertical and each has a width slightly wider than a thickness of the recording medium 2a or 2b.

The holders 90, the tray 91, and the supporters 92 are each made of ceramics, which is not affected by a microwave.

The optical recording medium 2a or 2b is retained by the disk retainer 9 by only insertion of the recording medium 2a or 2b between opposing grooves of adjoining holders 90, 90. Tilt of the recording medium 2a or 2b is restricted by the grooves and the medium 2a or 2b is prevented from dropping by a distance between the bottoms of the grooves. Thus, the present embodiment holds each of the optical recording media 2a, 2b vertically (in an upright position), with its both surfaces substantially parallel to the vertical line (a plumb line) by means of the retainer 9.

Though Fig. 16 illustrates the optical recording media 2a, 2b retained by the retainer 9, stacked in their thickness direction at equal intervals, the recording media 2a, 2b may be retained with the media 2a, 2b not stacked in their thickness direction. In such a case, a microwave is radiated to the recording media effectively, though the recording media to be mounted on the retainer 9 may decrease.

As shown in Fig. 14, the metal-separating device 7 of the present embodiment has a loader 86 consisting of a belt conveyor in front of the operation chamber 85, for conveying the optical recording media 2a, 2b retained by the retainer 9 into the operation chamber 85. The device 7 further has an unloader 88 consisting of a belt conveyor in back of the operation chamber 85, for conveying the optical recording media 2a, 2b retained by the retainer 9 out of the operation chamber 85. Further, a conveyor 87 is equipped within the operation chamber 85. The conveyor 87 is a belt conveyor adapted to receive the recording media 2a, 2b from the loader 86, to adjust and fix locations of the media 2a, 2b in the chamber 85, and to deliver the media 2a, 2b to the unloader 88.

Now, a method of using the metal-separating device 7 of the present embodiment will be described hereinafter.
Optical recording media 2a, 2b are set, each in the upright position, in the disk retainer 9 at a predetermined interval and the retainer 9, retaining the media 2a, 2b, is put on the loader 86.
The loader 86 is driven so as to convey the media 2a, 2b, together with the retainer 9, into the chamber 85, whose front is open as the front door 71 has moved upward.

The conveyor 87, having received the media 2a, 2b from the loader 86, is driven so as to locate the media 2a, 2b at predetermined positions in the chamber 85. Then, the front and the back doors 71, 72 are closed to set the chamber 85 in a closed state.

Both the gas valves 80, 82 are opened to introduce carbon dioxide gas into the operation chamber 85 and to discharge air contained in the chamber 85 by a pressure of the introduced gas (i.e., so-called "purge operation" is carried out). The gas valves 80, 82 are closed if the oxygen concentration in the chamber 85 has become below or equal to a predetermined level. A lean-oxygen state is maintained in the chamber 85.

Then, electric power is supplied to the microwave generator 75. A microwave generated in the generator 75 is branched via the branching filter into two microwaves, which are radiated into the chamber 85 through the waveguides 76, 77. In this state, the two microwaves radiated into the chamber 85 have mutually different phases.
Simultaneously, the electric power is supplied to the magnetic field generator 70 so as to generate a magnetic field in the operation chamber 85.

Intensities of the microwave and the magnetic field are controlled sequentially or stepwise by the intensity controllers 84, 83, respectively. Controls of these intensities are carried out by modifying voltages applied to the microwave generator 75 and the magnetic field generator 70 sequentially or stepwise. A sequential or stepwise modification in voltage makes a substantially sequential modification of a portion radiated in a concentrated fashion by the microwave, so that the microwave acts substantially uniformly on all the optical recording media 2a, 2b in the operation chamber 85.
The term "sequential or stepwise modification in voltage" includes a state in which no power is supplied.

Radiation of the microwave onto the optical recording media may cause a spark, but ignition is prevented and deterioration of plastics is reduced both by maintenance of the inner space of the operation chamber at low oxygen level.

The microwave generator 75 in the subject embodiment has a maximum output of 5 kW and an outputting frequency of 2.45 GHz. For disposing of the optical recording media 2a, 2b, a microwave is radiated for five minutes with its output being varied within 0 to 5 kW in saw-tooth fashion. Difference of lengths of the two waveguides 76, 77 is substantially 60 mm.

The maximum output of the microwave is preferably 0.1 kW or more for melting metal portions of the optical recording media 2a, 2b so as to separate the metal portions from plastic substrates. If the maximum output is below 0.1 kW, there is a high possibility that the microwave fails to melt the metal portions. On the other hand, an upper limit is not required in the maximum output. However, the microwave generator may be too bulky if the maximum output exceeds 5 kW. Also in the case, time duration of microwave radiation should be regulated strictly because a part of the metal portions might be heated in a quite short time to an extremely high temperature that might cause deterioration of a plastic portion. However, the foregoing description does not prohibit employment of a generator having a maximum output exceeding 5 kW.

Then, on completion of the operation on the optical recording media 2a, 2b, radiation of the microwave and generation of the magnetic field are terminated. The law oxygen state is maintained for a while, so as to avoid deterioration of the plastic portions due to sudden exposure to air of the media 2a, 2b in elevated temperature as well as to avoid emission of vaporized metal into air.

After a predetermined time duration, the back door 72 of the operation chamber 85 is shifted upward to open the chamber 85. The conveyor 87 and the unloader 88 are operated together to convey the optical recording media 2a, 2b (after the operation) out of the chamber 85.
Plastic portions of the media 2a, 2b remaining in the retainer 9 and metal that has flown into the tray 91 are to be recycled.

Though the embodiment of the metal-separating device 7 is heretofore described, configuration of each portion is not limited to the embodiment.
For example, though the optical recording media 2a, 2b are held by the retainer 9 in a substantially upright position in the embodiment, it is all right if the recording media 2a, 2b are held nonparallel to the horizontal plane. They may be held at a position having a predetermined angle to the horizontal plane.

The microwave radiators 73, 74 may be one that radiates a microwave not branched. In this case, a microwave generator 75 such as a magnetron may be positioned directly in the operation chamber 85 without a waveguide.

The magnetic field generator 70 may be composed of a plurality of electromagnets such as solenoid coils arranged so that their end faces are exposed to the inner space of the chamber 85. In this case, the electromagnets are controlled discretely so that a desired elaborate magnetic field is generated and so that a portion where a microwave or a magnetic field is concentrated is changed at will.

The lean-oxygen maintaining unit 78 may use an inert gas such as nitrogen gas instead of carbon dioxide gas and may maintain the inner space of the operation chamber 85 at low oxygen concentration by introducing the inert gas continuously into the chamber 85 with the chamber 85 open. Alternatively, the inner space of the chamber 85 may be evacuated to a vacuum state or a substantially vacuum state.

The microwave intensity controller 84 and the field intensity controller 83 may control electric current supplied to the microwave generator 75 and the field generator 70, respectively. They may be controlled automatically by a computer.

The above-described exemplary metal-separating device for the optical recording media is of an in-line type having a loader 86, an unloader 88, and a conveyor 87. However, the device may be of a batch type like a microwave oven in house, i.e., having an operation chamber 85 with a single door, whereby optical recording media 2a, 2b held by the disk retainer 9 are manually set in the chamber 85 and subjected to an operation after closure of the door and then the recording media 2a, 2b are brought out after opening of the door.

In the above-described embodiment, the conveyor 87 is not driven while the optical recording media 2a, 2b are under erasing operation. However, the conveyor 87 may be driven while the media 2a, 2b are under the operation, so that the media 2a, 2b are mechanically moved during the operation, because in some case, for example, in relation to a form of the operation chamber 85, the media 2a, 2b should be moved mechanically so as to be treated to a higher grade.

## Claims

1. A method for disposing of a data recording means including at least one medium selected from an optical recording medium and a magnetic recording medium, comprising the steps of:
putting the data recording means into a bag;
fastening an opening of the bag with a strap;
putting the bag into a recovery box;
sealing the recovery box containing the bag;
delivering the sealed box to an operation site; and
disposing of data recorded in the data recording means by destroying or erasing the data at the operation site with the delivered box sealed by means of at least one device selected from an optical-data destroying device adapted to radiate a microwave and a magnetic-data erasing device adapted to generate a magnetic field.

2. The method according to claim 1,
further comprising the steps of:
opening the sealed box;
separating the data recording means into fragments according to materials;
sorting the fragments according to materials; and
producing recycled raw materials by exerting at least one operation consisting of crushing, fusion and dissolution on at least part of the sorted fragments.

3. The method according to claim 2,
wherein the step of separating the data recording means involves the step of separating an optical recording medium, and
wherein the step of separating the optical recording medium includes heating a metal part of the optical recording medium by a metal-separating device adapted to radiate a microwave so as to separate the metal part from a plastic part.

4. The method according to claim 2,
wherein the step of separating the data recording means involves a step of separating an optical recording medium, and
wherein the step of separating the optical recording medium includes scraping off a metal part from a plastic part of the optical recording medium by means of a scraper.

5. The method according to one of claims 1 to 4,
wherein the optical-data destroying device and the magnetic-data erasing device are combined to form an integrated apparatus for disposing of the data recording means.

6. A method for disposing of a data recording means including data recording paper, comprising the steps of:
putting the data recording paper into a bag;
fastening an opening of the bag with a strap;
putting the bag into a recovery box;
sealing the recovery box containing the bag;
delivering the sealed box to an operation site; and
disposing of data recorded in the data recording means by dissolving at the operation site the delivered box together with the data recording paper contained therein, with the box sealed.

7. The method according to claim 6,
further comprising the step of refining the dissolved data recording paper and the dissolved box so as to form a recycled material.

8. The method according to one of claims 1 to 7,
wherein the recovery box is of a box shape and comprises four peripheral walls each joining side to side, four top flaps joining upper sides of the peripheral walls respectively, and four bottom flaps joining lower sides of the peripheral walls respectively, and
wherein the recovery box is preliminarily processed in the below-listed steps of:
binding the strap around an outer periphery of the bag;
putting the bag in the recovery box with the top flaps and the bottom flaps opened and extended;
projecting an end of the strap from between two adjacent top flaps;
folding back an opening end of the bag outward along the top flaps; and
folding flat the box such that the adjacent peripheral walls come close each other.

9. The method according to one of claims 1 to 8,
wherein the strap is movable only in a fastening direction.

10. The method according to one of claims 1 to 9,
wherein the bag has a guideline for providing an indication of maximum acceptable amount.

11. The method according to one of claims 1 to 10,
wherein the steps of putting the data recording means into the bag, putting the bag into the recovery box, and sealing the recovery box are carried out by a client asking disposal thereof, and
wherein the steps of delivering the sealed box to an operation site and disposing of data are carried out by one selected from (1) the client, (2) one receiving a request from the client, and (3) a third party receiving a request from either of the former ones.

12. The method according to one of claims 1 to 11,
further comprising the steps of:
putting the sealed box into a lockable carrying case and locking up the carrying case;
delivering (1) the carrying case containing the sealed box and (2) a key for the carrying case separately to an operation site; and
taking out the sealed box by releasing the lock of the carrying case by means of the key.

13. The method according to claim 12,
wherein the step of putting the sealed box into the carrying case and locking up the carrying case is carried out by a client asking disposal thereof, and
wherein the steps of delivering the carrying case and the key to an operation site and taking out the sealed box by releasing the lock of the carrying case by means of the key are carried out by one selected from (1) the client, (2) one receiving a request from the former client, and (3) a third party receiving a request from either of the former ones.

14. The method according to one of claims 1 to 13,
further comprising the step of issuing a certificate showing completion of disposal of the data recording means from the operation site to a source of delivery.

15. A recovery box being of a box shape, comprising:
four peripheral walls each joining side to side;
four top flaps joining upper sides of the peripheral walls respectively; and
four bottom flaps joining lower sides of the peripheral walls respectively,
wherein the recovery box is accompanied by a bag and a strap for fastening an opening of the bag, and
wherein the recovery box is processed in such a manner as binding the strap around an outer periphery of the bag, putting the bag in the recovery box with the top flaps and the bottom flaps opened and extended, projecting an end of the strap from between two adjacent top flaps, folding back an opening end of the bag outward along the top flaps, and folding flat the box such that the adjacent peripheral walls come close each other.

16. The recovery box according to claim 15,
wherein the strap is movable only in a fastening direction.

17. The recovery box according to claim 15 or 16,
wherein the bag has a guideline for providing an indication of maximum acceptable amount.
